# EUROPEAN PATENT APPLICATION

(11) **EP 4 274 128 A1**
(43) Date of publication of application: **08.11.2023**
(21) Application number: 22742283.9
(22) Date of filing: 25.01.2022
(51) Int. Cl.: H04L 1/00

(54) **COMMUNICATION METHOD AND APPARATUS, AND SYSTEM, STORAGE MEDIUM AND COMPUTER PROGRAM PRODUCT**

(30) Priority: 25.01.2021 CN 202110099756; 10.02.2021 CN 202110185523
(71) Applicant: Huawei Technologies Co., Ltd., Shenzhen, Guangdong 518129 (CN)
(72) Inventor: HE, Xiang, Shenzhen, Guangdong 518129 (CN); REN, Hao, Shenzhen, Guangdong 518129 (CN)
(74) Representative: Epping - Hermann - Fischer
(86) International application number: PCT/CN2022/073651
(87) International publication number: WO 2022/156806

(57) **Abstract**

This application relates to the communication field, and discloses a communication method, apparatus, and system, a storage medium, and a computer program product. The method includes: obtaining a data stream, where the data stream includes an alignment marker AM group, the AM group includes a plurality of AMs, the plurality of AMs include a first AM, the first AM includes a first boundary part and a first padding part, the first padding part includes a part or all of first information, the first information is used to indicate a specified function, and the first boundary part is used to determine a location of the first AM in the data stream; and sending the data stream. This application can provide a new method for sending information.

## Description

This application claims priority to Chinese Patent Application No. 202110099756.6, filed on January 25, 2021 and entitled "DATA PROCESSING METHOD, DEVICE, AND SYSTEM", which is incorporated herein by reference in its entirety. In addition, this application claims priority to Chinese Patent Application No. 202110185523.8, filed on February 10, 2021 and entitled "COMMUNICATION METHOD, APPARATUS, AND SYSTEM, STORAGE MEDIUM, AND COMPUTER PROGRAM PRODUCT", which is incorporated herein by reference in its entirety.

### TECHNICAL FIELD

This application relates to the communication field, and in particular, to a communication method, apparatus, and system, a storage medium, and a computer program product.

### BACKGROUND

At present, a rate of a high-speed Ethernet interface is much higher than that of a single lane. To match the rate of the high-speed Ethernet interface, a plurality of lanes are used to transmit in parallel a data stream sent through the high-speed Ethernet interface.

For example, it is assumed that the rate of the high-speed Ethernet interface is 400 G/s, and the rate of the single lane is 25 G/s. In this case, 16 lanes are needed to transmit in parallel a data stream sent through the high-speed Ethernet interface. To be specific, the data stream is divided into 16 sub-data streams at the high-speed Ethernet interface, and the 16 sub-data streams are sent. In a process of implementing this application, the inventor finds that a current technology has at least the following disadvantages.

The foregoing solution for sending the data stream in parallel further has many drawbacks. For example, the foregoing solution is not suitable for sending information that has a relatively high requirement on time stability and reliability. Therefore, a new method for sending the information is required.

### SUMMARY

This application provides a communication method, apparatus, and system, a storage medium, and a computer program product, to provide a new method for sending information. The technical solutions are described below.

According to a first aspect, this application provides a communication method. The method includes: obtaining a data stream, where the data stream includes an alignment marker AM group, the AM group includes a plurality of AMs, the plurality of AMs include a first AM, the first AM includes a first boundary part and a first padding part, the first padding part includes a part or all of first information, the first information is used to indicate a specified function, and the first boundary part is used to determine a location of the first AM in the data stream; and sending the data stream.

For each of the AMs in the AM group, a recipient of the data stream does not use pad information included in a padding part of each of the AMs, and the pad information is useless information for the recipient. Therefore, when the data stream is sent, pad information included in the first padding part of the first AM in the AM group may be replaced with the first information or some content of the first information, so that the first padding part includes the first information or some content of the first information. In this way, when receiving the data stream, the recipient obtains the first information in the AM group, thereby implementing a new manner of sending information. Because the first information is sent by using the padding part of the AM, the recipient performs the specified function based on the first information, and does not have any influence on the data stream, so that an out-of-band bandwidth resource is well used to send the first information, thereby reducing a waste of the bandwidth resource. In addition, in the data stream, because the AMs are distributed in the data stream at regular intervals, that is, the AMs in the data stream are periodically sent, time for sending the AMs is stable. In this way, information that has a relatively high requirement on time stability and reliability may be sent by using the padding part of the AM. In a possible implementation, there are a plurality of obtained data streams, each of the data streams corresponds to one or more AMs in the AM group, and each of the data streams includes one or more AMs corresponding to each of the data streams. The one or more AMs corresponding to the data stream are distributed in the data stream at regular intervals. Therefore, by including the first information in the AMs in the AM group, and the information that has a relatively high requirement on time stability and reliability may be sent.

In another possible implementation, the first information is associated with a first data stream, the plurality of data streams include the first data stream, an AM in the first data stream includes the first information, and the first AM is an AM in the first data stream. Because the first information is associated with the first data stream, the first information is carried in the AM in the first data stream. In this way, the recipient obtains the first information in the AM in the first data stream, and then can learn that the first information is associated with the first data stream, so that the recipient can more easily identify and parse the first information.

In another possible implementation, the plurality of data streams include M data streams, an AM in the M data streams includes the first information, the first AM is an AM in the M data streams, and M is an integer greater than 0. In this way, padding parts of the plurality of AMs may be used to include the first information, and may be used to transmit the first information with a relatively large amount of data, so that bandwidth resources of the padding parts of the plurality of AMs are well used.

In another possible implementation, a padding part of each AM in the M data streams includes m fields, m is an integer greater than 0, and the first information includes at least one piece of sub-information. m first fields include m pieces of first sub-information, and m second fields include m pieces of second sub-information. The m first fields are fields included in a j^{th} AM in an i^{th} data stream, and the m second fields are fields included in a j^{th} AM in an (i+1)^{th} data stream, where i=1, 2, ..., or M-1, j=1, 2, ..., or N, N is a quantity of AMs in the i^{th} data stream, and the m pieces of first sub-information and the m pieces of second sub-information are 2m continuous pieces of sub-information included in the first information.

That is, the AM in each of the data streams is used to include the first information in a specified order, and the specified order is: for a j^{th} AM in each of the data streams, a j^{th} AM in a first data stream is used to include m continuous pieces of sub-information in the first information, a j^{th} AM in a second data stream is used to include m continuous pieces of sub-information in the first information, ..., and a j^{th} AM in an M^{th} data stream is used to include m continuous pieces of sub-information in the first information. That is, the first information is included in the specified order. In this way, it is convenient for the recipient to obtain different parts of content of the first information in different AMs, and combine the different parts of content into the first information. In another possible implementation, M fields include M continuous pieces of sub-information, and the M fields include an n^{th} field in a j^{th} AM in each data stream in the M data streams, where n=1, 2, ..., or m, and the first information includes the M pieces of sub-information. That is, the AM in each of the data streams is used to include the first information in a specified order, and the specified order is: for j^{th} AMs in the M data streams, that is, M j^{th} AMs, first fields in the M j^{th} AMs are used to include M continuous pieces of sub-information in the first information, second fields in the M j^{th} AMs are used to include M continuous pieces of sub-information in the first information, ..., and m^{th} fields in the M j^{th} AMs are used to include M continuous pieces of sub-information in the first information. That is, the first information is included in the specified order. In this way, it is convenient for the recipient to obtain different parts of content of the first information in different AMs, and combine the different parts of content into the first information. In another possible implementation, the m fields in the padding part of each of the AMs include a unique pad UP and/or a pad Pad. Because pad information included in the UP and the pad is not used by the recipient, the pad information included in the UP and/or the pad is replaced with the first information, so that the UP and/or the pad include/includes the first information used to indicate the specified function, and a resource is well used to transmit information useful to the recipient.

In another possible implementation, the AM group is obtained. The AM group includes the first AM, and the first padding part of the first AM includes the first information or the part of the first information. The AM group is inserted into a second data stream to obtain the data stream. In this way, it is ensured that the AM group includes the first information.

In another possible implementation, when the AM group is inserted into the data stream, and the inserted AM group includes the first AM, in the data stream, content carried in the first padding part of the first AM is replaced with the first information or the part of the first information. In this way, it is ensured that the AM group includes the first information.

In another possible implementation, the first AM further includes a first identification part, and the first identification part is used to indicate a data stream corresponding to the first AM. In this way, different data streams are identified by using the first identification part.

According to a second aspect, this application provides a communication method. The method includes: receiving a data stream, where the data stream includes an alignment marker AM group, the AM group includes a plurality of AMs, the plurality of AMs include a first AM, the first AM includes a first boundary part and a first padding part, the first padding part includes a part or all of first information, the first information is used to indicate a specified function, and the first boundary part is used to determine a location of the first AM in the data stream; and obtaining the first information in the AM group.

For each of the AMs in the AM group, a recipient of the data stream does not use pad information included in a padding part of each of the AMs, and the pad information is useless information for the recipient. Therefore, in the data stream, pad information included in the first padding part of the first AM in the AM group may be replaced with the first information or some content of the first information, so that the first padding part includes the first information or some content of the first information. In this way, when the data stream is received, the first information in the AM group is obtained, thereby implementing a new manner of sending information. Because the padding part of the AM is used to include the first information, the specified function is performed based on the first information after the data stream is received, without any influence on the data stream, so that an out-of-band bandwidth resource is well used to send the first information, thereby reducing a waste of the bandwidth resource. In addition, in the data stream, because the AMs are distributed in the data stream at regular intervals, that is, a sender sends the AMs in the data stream periodically, time for sending the AMs is stable. In this way, information that has a relatively high requirement on time stability and reliability may be sent by using the padding part of the AM.

In a possible implementation, there are a plurality of received data streams, each of the data streams corresponds to one or more AMs in the AM group, and each of the data streams includes one or more AMs corresponding to each of the data streams. The one or more AMs corresponding to the data stream are distributed in the data stream at regular intervals. Therefore, by including the first information in the AMs in the AM group, and the information that has a relatively high requirement on time stability and reliability may be sent.

In another possible implementation, the first information is associated with a first data stream, the plurality of data streams include the first data stream, an AM in the first data stream includes the first information, and the first AM is an AM in the first data stream. Because the first information is associated with the first data stream, the first information is carried in the AM in the first data stream. In this way, the first information in the AM in the first data stream is obtained, and then that the first information is associated with the first data stream can be learned, to more easily identify and parse the first information.

In another possible implementation, the plurality of data streams include M data streams, an AM in the M data streams includes the first information, the first AM is an AM in the M data streams, and M is an integer greater than 0. In this way, padding parts of the plurality of AMs may be used to include the first information, and may be used to transmit the first information with a relatively large amount of data, so that bandwidth resources of the padding parts of the plurality of AMs are well used.

In another possible implementation, a padding part of each AM in the M data streams includes m fields, m is an integer greater than 0, and the first information includes at least one piece of sub-information. m first fields include m pieces of first sub-information, and m second fields include m pieces of second sub-information. The m first fields are fields included in a j^{th} AM in an i^{th} data stream, and the m second fields are fields included in a j^{th} AM in an (i+1)^{th} data stream, where i=1, 2, ..., or M-1, j=1, 2, ..., or N, N is a quantity of AMs in the i^{th} data stream, and the m pieces of first sub-information and the m pieces of second sub-information are 2m continuous pieces of sub-information included in the first information.

That is, the AM in each of the data streams is used to include the first information in a specified order, and the specified order is: for a j^{th} AM in each of the data streams, a j^{th} AM in a first data stream is used to include m continuous pieces of sub-information in the first information, a j^{th} AM in a second data stream is used to include m continuous pieces of sub-information in the first information, ..., and a j^{th} AM in an M^{th} data stream is used to include m continuous pieces of sub-information in the first information. That is, the first information is included in the specified order. In this way, it is convenient for the recipient to obtain different parts of content of the first information in different AMs, and combine the different parts of content into the first information. In another possible implementation, M fields include M continuous pieces of sub-information, and the M fields include an n^{th} field in a j^{th} AM in each data stream in the M data streams, where n=1, 2, ..., or m, and the first information includes the M pieces of sub-information. That is, the AM in each of the data streams is used to include the first information in a specified order, and the specified order is: for j^{th} AMs in the M data streams, that is, M j^{th} AMs, first fields in the M j^{th} AMs are used to include M continuous pieces of sub-information in the first information, second fields in the M j^{th} AMs are used to include M continuous pieces of sub-information in the first information, ..., and m^{th} fields in the M j^{th} AMs are used to include M continuous pieces of sub-information in the first information. That is, the first information is included in the specified order. In this way, it is convenient for the recipient to obtain different parts of content of the first information in different AMs, and combine the different parts of content into the first information. In another possible implementation, the m fields in the padding part of each of the AMs include a unique pad UP and/or a pad Pad. Because pad information included in the UP and the pad is not used by the recipient, the pad information included in the UP and/or the pad is replaced with the first information, so that the UP and/or the pad include/includes the first information used to indicate the specified function, and a resource is well used to transmit information useful to the recipient.

In another possible implementation, after the plurality of data streams are sorted, the first information in the AM group in the plurality of sorted data streams is obtained. Because the first information is obtained in the AM group in the sorted data streams, that is, the first information may be obtained before decoding, when sending the first information, the sender may not need to perform FEC encoding on the first information, so that a computing resource used by the sender can be reduced.

In another possible implementation, the first information is obtained in at least one first data block and at least one second data block when the at least one first data block and the at least one second data block are obtained by decoding the plurality of sorted data streams, where the at least one first data block and the at least one second data block jointly include the first information. Because the first information is obtained in the decoded data blocks, that is, the first information may be obtained after decoding, when sending the first information, the sender may perform FEC encoding on the first information, so that the first information having a relatively high safety requirement can be transmitted.

In another possible implementation, the first information is obtained in an AM group in one data stream when the at least one first data block and the at least one second data block are interleaved to obtain the data stream. Because the first information is obtained in the AM group in the data stream obtained by interleaving, that is, the first information may be obtained after decoding, when sending the first information, the sender may perform FEC encoding on the first information, so that the first information having a relatively high safety requirement can be transmitted.

In another possible implementation, the first AM further includes a first identification part, and the first identification part is used to indicate a data stream including the first AM. In this way, different data streams are identified by using the first identification part.

According to a third aspect, this application provides a communication apparatus, configured to perform the method according to any one of the first aspect or the possible implementations of the first aspect. Specifically, the apparatus includes units configured to perform the method according to any one of the first aspect or the possible implementations of the first aspect.

According to a fourth aspect, this application provides a communication apparatus, configured to perform the method according to any one of the second aspect or the possible implementations of the second aspect. Specifically, the apparatus includes units configured to perform the method according to any one of the second aspect or the possible implementations of the second aspect. According to a fifth aspect, this application provides a communication device. The device includes a processor and a computer program, and the processor is configured to execute the computer program, so that the device completes the method according to any one of the first aspect or the possible implementations of the first aspect.

According to a sixth aspect, this application provides a communication device. The device includes a processor and a computer program, and the processor is configured to execute the computer program, so that the device completes the method according to any one of the second aspect or the possible implementations of the second aspect.

According to a seventh aspect, this application provides a computer program product. The computer program product includes a computer program, and the computer program is loaded by a computer to implement the method according to any one of the first aspect, the second aspect, the possible implementations of the first aspect, or the possible implementations of the second aspect.

According to an eighth aspect, this application provides a computer-readable storage medium, configured to store a computer program. The computer program is loaded by a processor to perform the method according to any one of the first aspect, the second aspect, the possible implementations of the first aspect, or the possible implementations of the second aspect. According to a ninth aspect, this application provides a chip, including a processor. The processor is configured to run computer instructions, to perform the method according to any one of the first aspect, the second aspect, the possible implementations of the first aspect, or the possible implementations of the second aspect. The computer instructions may be in a memory inside the processor or an external memory.

According to a tenth aspect, this application provides a communication system, including the apparatus according to the third aspect and/or the apparatus according to the fourth aspect, or including the apparatus according to the fifth aspect and/or the apparatus according to the sixth aspect.

### BRIEF DESCRIPTION OF DRAWINGS

FIG. 1 is a schematic diagram of a network architecture according to an embodiment of this application;
FIG. 2 is a schematic diagram of structures of a first device and a second device according to an embodiment of this application;
FIG. 3 is a schematic diagram of an alignment marker (alignment marker, AM) set according to an embodiment of this application;
FIG. 4 is a schematic diagram of an AM set including eight AMs according to an embodiment of this application;
FIG. 5 is a schematic diagram of an AM set including 16 AMs according to an embodiment of this application;
FIG. 6 is a flowchart of a communication method according to an embodiment of this application;
FIG. 7 is a schematic diagram of replacing content of a padding part with first information according to an embodiment of this application;
FIG. 8 is another schematic diagram of replacing content of a padding part with first information according to an embodiment of this application;
FIG. 9 is a schematic diagram in which at least one AM includes first information according to an embodiment of this application;
FIG. 10 is another schematic diagram in which at least one AM includes first information according to an embodiment of this application;
FIG. 11 is another schematic diagram in which at least one AM includes first information according to an embodiment of this application;
FIG. 12 is a flowchart of another communication method according to an embodiment of this application;
FIG. 13 is a schematic diagram of obtaining first information according to an embodiment of this application;
FIG. 14 is another schematic diagram of obtaining first information according to an embodiment of this application;
FIG. 15 is another schematic diagram of obtaining first information according to an embodiment of this application;
FIG. 16 is a schematic diagram of a structure of a communication apparatus according to an embodiment of this application;
FIG. 17 is a schematic diagram of a structure of another communication apparatus according to an embodiment of this application;
FIG. 18 is a schematic diagram of a structure of a communication device according to an embodiment of this application;
FIG. 19 is a schematic diagram of a structure of another communication device according to an embodiment of this application; and
FIG. 20 is a schematic diagram of a structure of a communication system according to an embodiment of this application.

### DESCRIPTION OF EMBODIMENTS

Embodiments of this application are further described in detail with reference to the accompanying drawings.

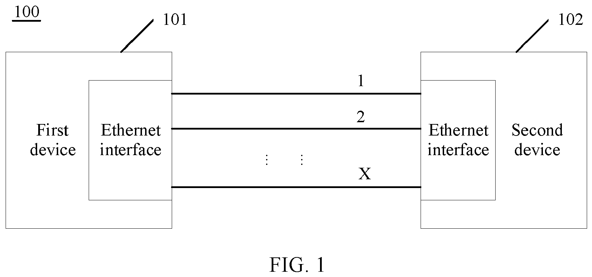

Refer to FIG. 1. An embodiment of this application provides a network architecture 100, including:
a first device 101 and a second device 102, where the first device 101 is in communication with the second device 102. Specifically, the first device 101 communicates with the second device 102 by using respective Ethernet interfaces.

Optionally, there are X physical channels between the first device 101 and the second device 102, where X is an integer greater than 0, to implement the communication between the first device 101 and the second device 102. Clearly, there are other manners for the communication between the first device 101 and the second device 102, and the manners are not enumerated herein. The X physical channels may be between one or more Ethernet interfaces of the first device 101 and one or more Ethernet interfaces of the second device 102.

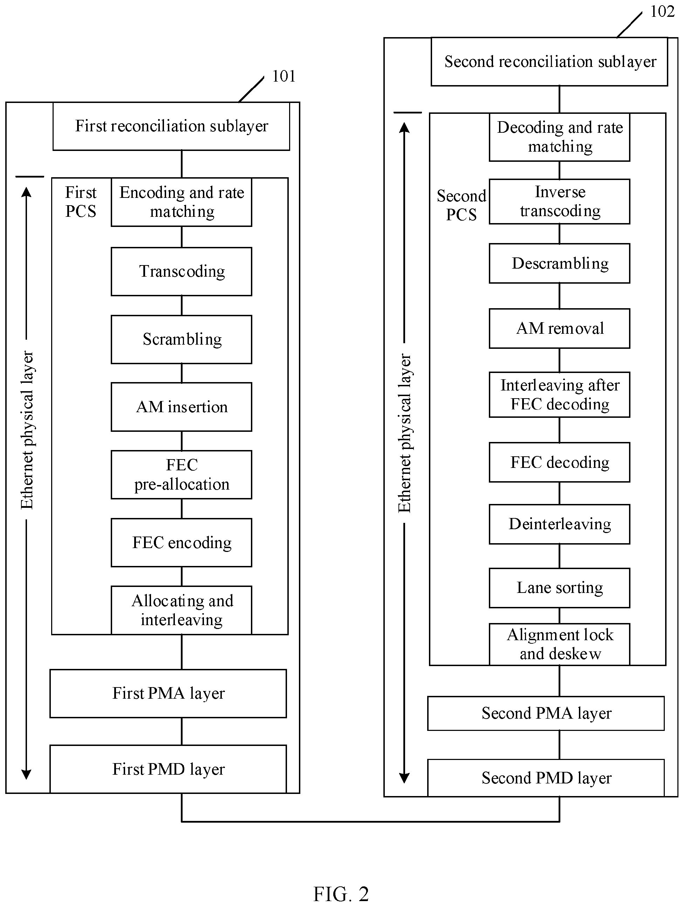

Refer to FIG. 2. For any one device in the first device 101 and the second device 102, the device includes a reconciliation sublayer (reconciliation sublayer) and an Ethernet physical layer. The Ethernet physical layer includes a physical coding sublayer (physical coding sublayer, PCS), a physical medium attachment (physical medium attachment, PMA) layer, and a physical medium dependent (physical media dependent, PMD) layer. The PCS defines Z PCS lanes. The Z PCS lanes are in a one-to-one correspondence with Z alignment markers (alignment marker, AM), and the Z PCS lanes are virtual lanes. Z is an integer greater than 0, and Z is an integer multiple of X, for example, Z=2×X or 4×X.

For example, refer to FIG. 2. The first device 101 includes a first reconciliation sublayer and an Ethernet physical layer, and the Ethernet physical layer of the first device 101 includes a first PCS, a first PMA layer, and a first PMD layer. The second device 102 includes a second reconciliation sublayer and an Ethernet physical layer, and the Ethernet physical layer of the second device 102 includes a second PCS, a second PMA, and a second PMD layer. The first PCS defines Z PCS lanes, the second PCS also defines Z PCS lanes, and an order among the Z PCS lanes in the first PCS is the same as an order among the Z PCS lanes in the second PCS.

The first device 101 may send a data stream to the second device 102. A process of sending the data stream may be as follows:
For a target data stream that needs to be sent at the first reconciliation sublayer, the first device 101 inserts, in the first PCS, an AM set into the target data stream, where the AM set includes Z AMs. The data stream with the inserted AM set is divided into Z data streams. The Z data streams are in a one-to-one correspondence with the Z AMs, each of the data streams includes an AM corresponding to each of the data streams, and each of the data streams corresponds to a PCS lane corresponding to the AM in each of the data streams, so that the Z data streams are also in a one-to-one correspondence with the Z PCS lanes. The Z data streams are input in parallel into the first PMA layer, and a position of each of the data streams in the order corresponds to a position of the PCS lane, in the order, corresponding to each of the data streams. At the first PMA layer, the Z data streams are combined into X data streams, and the X data streams are input into the first PMD layer. At the first PMD layer, the X data streams are sent to the second device 102 through the X physical channels. In addition to the foregoing combination operation performed on the Z data streams, another operation may be further performed at the first PMA layer. Another operation is not described one by one herein.

At the second PMD layer, the second device 102 receives the X data streams on the X physical channels, and inputs the X data streams into the second PMA layer. At the second PMA layer, the Z data streams are restored based on the X data streams, and the Z data streams are input into the second PCS. In the second PCS, an AM included in each data stream in the Z data streams is determined, the Z data streams are aligned based on the AM included in each of the data streams, and the PCS lane corresponding to each of the data streams is determined based on the AM included in each of the data streams. The Z aligned data streams are sorted based on the PCS lane corresponding to each of the data streams, where a position of each of the data streams in the order is the same as a position of the PCS lane, in the order, corresponding to each of the data streams. The Z data streams after being sorted are combined into one data stream, the AM set is removed from the combined data stream, the target data stream is restored based on the data stream from which the AM set is removed, and the target data stream is input into the second reconciliation sublayer.

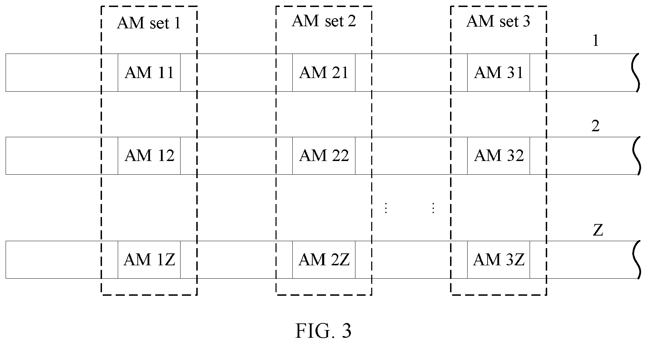

Refer to FIG. 3. For each data stream in the Z data streams, one or more AMs are distributed in the data stream at regular intervals, and each AM in the data stream belongs to a different AM set. For each AM in the data stream, the AM includes a boundary part, an identification part, and a padding part. The boundary part is used to determine a location of the AM in the data stream, the identification part is used to indicate a PCS lane corresponding to the AM, and the padding part is used to carry pad information.

For example, as shown in FIG. 3, for a data stream 1, an AM 11, an AM 12, and an AM 13 are distributed in the data stream 1 at regular intervals, where the AM 11, the AM 12, and the AM 13 belong to an AM set 1, an AM set 2, and an AM set 3 respectively. An AM 12, an AM 22, and an AM 32 are distributed in a data stream 2 at regular intervals, and the AM 12, the AM 22, and the AM 32 belong to the AM set 1, the AM set 2, and the AM set 3 respectively. An AM 1Z, an AM 2Z, and an AM 3Z are distributed in a data stream Z at regular intervals, and the AM 1Z, the AM 2Z, and the AM 3Z belong to the AM set 1, the AM set 2, and the AM set 3 respectively.

In this way, for the second device 102 and each data stream in the Z data streams, in the second PCS, the second device 102 determines the location of the AM in each of the data streams by identifying the boundary part included in the AM in each of the data streams, to obtain the AM in each of the data streams. A time span for obtaining the AM in each of the data streams is relatively short, and there is a large amount of other data between two adjacent AMs in each of the data streams. Therefore, all AMs obtained within the time span belong to a same AM set, and then the PCS lane corresponding to each of the data streams is determined based on the identification part included in the AM in each of the data streams.

Optionally, for each of the AMs in the AM set, boundary parts of the AMs include a same bit pattern (bit pattern). The bit pattern is used to determine a location of the AM. Therefore, the second device 102 may determine the AM in each data stream in the Z data streams based on the bit pattern included in the boundary part of each of the AMs. Bit patterns included in identification parts of the AMs are different from each other, and bit patterns included in identification parts of the AMs correspond to different PCS lanes. Therefore, the second device 102 determines the PCS lane corresponding to each of the data streams based on the bit pattern included in the identification part of each of the AMs.

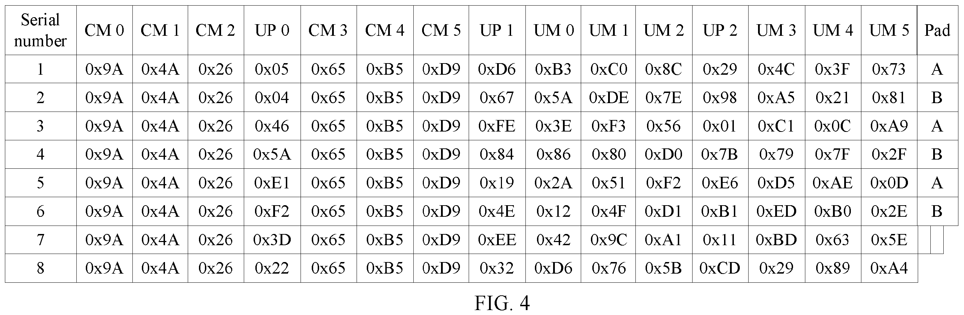

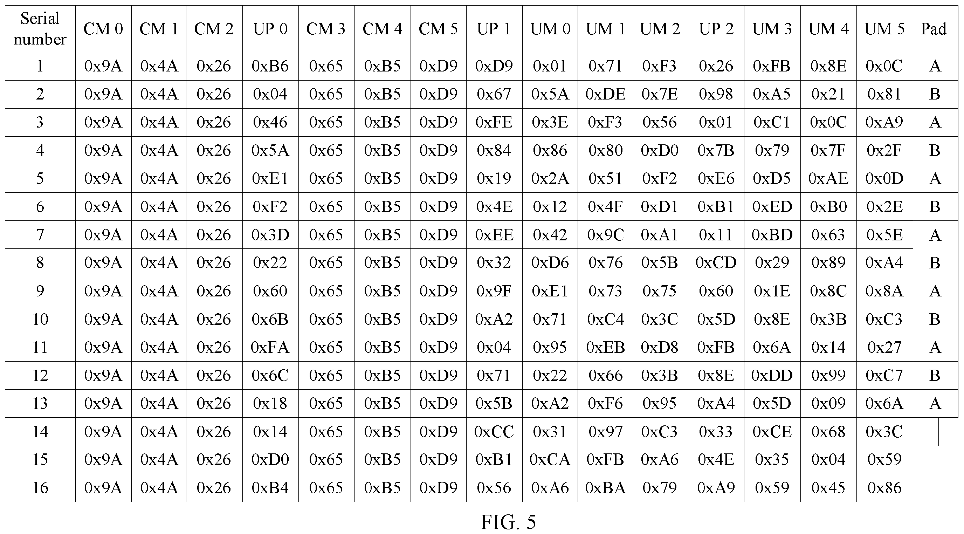

Refer to an AM set shown in FIG. 4. The AM set includes eight AMs, that is, Z=8, and the AM set is an AM set corresponding to a 200 GbE Ethernet interface. Alternatively, refer to an AM set shown in FIG. 5. The AM set includes 16 AMs, that is, Z=16, and the AM set is an AM set corresponding to a 400 GbE Ethernet interface. A boundary part of each of the AMs includes six fields, that is, a common marker (common marker, CM) 0, a CM 1, a CM 2, a CM 3, a CM 4, and a CM 5. Refer to FIG. 4 and FIG. 5. CMs 0 of the AMs each include a same bit pattern, CMs 1 of the AMs each include a same bit pattern, CMs 2 of the AMs each include a same bit pattern, CMs 3 of the AMs each include a same bit pattern, CMs 4 of the AMs each include a same bit pattern, and CMs 5 of the AMs each include a same bit pattern. In this way, the boundary parts of all the AMs are the same.

The identification part of each of the AMs includes six fields, that is, a unique marker (unique marker, UM) 0, a UM 1, a UM 2, a UM 3, a UM 4, and a UM 5. Refer to FIG. 4 and FIG. 5. Bit patterns included in UMs 0 of the AMs are different from each other, bit patterns included in UMs 1 of the AMs are different from each other, bit patterns included in UMs 2 of the AMs are different from each other, bit patterns included in UMs 3 of the AMs are different from each other, bit patterns included in UMs 4 of the AMs are different from each other, and bit patterns included in UMs 5 of the AMs are different from each other. In this way, the identification parts of all the AMs are different from each other.

For each of the AMs, the padding part of the AM includes three padding fields, that is, a unique pad (unique pad, UP) 0, a UP 1, and a UP 2. The padding part of the AM may further include a pad (Pad), or may not include a pad. For example, refer to the eight AMs shown in FIG. 4. The first to the seventh AMs each include a pad, and the eighth AM does not include a pad. Refer to the 16 AMs shown in FIG. 5. The first to the fourteenth AMs each include a pad, and the fifteenth to the sixteenth AMs do not include a pad.

Optionally, for each of the foregoing AM sets, a size of the AM set is an integer multiple of a specified size. For example, the specified size may be 257 bits, that is, the size of the AM set is an integer multiple of 257 bits, for example, may be 8×257 bits or 16×257 bits.

The first device 101 performs, in the first PCS, different processing operations on the target data stream to obtain the Z data streams. These processing operations are as follows:
Refer to FIG. 2. For the target data stream from the first reconciliation sublayer, the first device 101 performs encoding and rate matching on the target data stream, transcodes the processed data stream, scrambles the transcoded data stream, inserts the AM set into the scrambled data stream, pre-allocates the data stream with the inserted AM set, to obtain a first data block and a second data block, and performs FEC encoding on the first data block and the second data block separately to obtain a first code word and a second code word, allocates and interleaves the first code word and the second code word to form the Z data streams.

The second device 102 performs, in the second PCS, different processing operations on the Z data streams to obtain the target data stream. These processing operations are as follows:
Refer to FIG. 2. For the Z data streams from the second PMA layer, the second device 102 performs alignment lock (alignment lock) and deskew (deskew) on the Z data streams. A process of the alignment lock and deskew may be as follows: The second device 102 identifies the boundary part included in the AM in each of the data streams, to obtain the AM in each of the data streams, and aligning the Z data streams based on the AM included in each of the data streams. In a scenario that does not include a plurality of PCS lanes, that is, in a scenario in which Z=1, the deskew operation is not needed, and the second device 102 identifies the boundary part included in the AM in each of the data streams, to obtain the AM in each of the data streams.

The second device 102 performs lane sorting on the aligned Z data streams. A process of lane sorting may be as follows: The second device 102 determines, based on the identification part included in the AM in each of the data streams, the PCS lane corresponding to each of the data streams, and sorts the Z data streams based on the PCS lane corresponding to each of the data streams. For the sorted Z data streams, an order among the Z data streams is the same as the order among the Z data streams in the first PCS.

Then, the second device 102 deinterleaves the sorted Z data streams to obtain the first code word and the second code word, and performs FEC decoding on the first code word and the second code word to obtain the first data block and the second data block. Interleaving after FEC decoding is performed on the first data block and the second data block to obtain one data stream, and the data stream includes the AM set. The AM set is removed from the data stream, the data stream from which the AM set is removed is descrambled, inverse transcoding is performed on the descrambled data stream, and decoding and rate matching are performed on the data stream on which inverse transcoding is performed, to restore the target data stream.

In some embodiments, in a process in which the second device 102 performs FEC decoding on the first code word and the second code word, the second device 102 checks whether there is error information in the first code word and the second code word. When error information is found, the error information may be corrected, or the error information is not corrected.

It can be learned from the foregoing process in which the second device 102 processes the Z data streams in the second PCS that the second device 102 does not use the pad information included in the padding part of each of the AMs. As a result, for the second device 102, the pad information included in the padding part of each of the AMs is useless information, causing a waste of network resources. To well use a network resource, this application provides a new method for sending information. For detailed implementation of the method, refer to implementation of any one of the following embodiments.

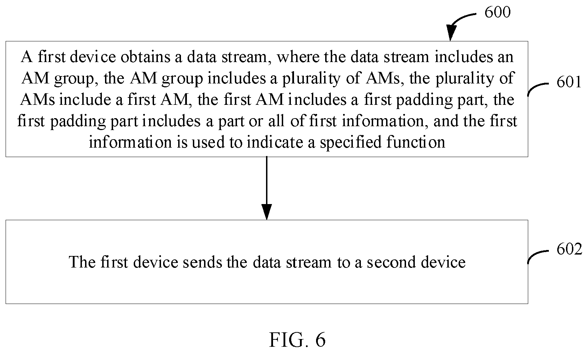

Refer to FIG. 6. An embodiment of this application provides a communication method 600. The method 600 is applied to the network architecture 100 shown in FIG. 1 or FIG. 2. The method 600 may be performed by the first device 101 in the network architecture 100 shown in FIG. 1 or FIG. 2. The method 600 includes the following steps.

Step 601: A first device obtains a data stream, where the data stream includes an AM group, the AM group includes a plurality of AMs, the plurality of AMs include a first AM, the first AM includes a first padding part, the first padding part includes a part or all of first information, and the first information is used to indicate a specified function.

The first information includes one or more of an initialization vector of a physical layer encryption algorithm, port management information, time synchronization information, and the like. The specified function includes one or more of a physical layer encryption function indicated by the initialization vector, a port management function indicated by the port management information, a time synchronization function indicated by the time synchronization information, and the like. Optionally, the specified function is a function that needs to be performed by a recipient of the first information. For the recipient of the first information, the recipient needs to use the first information to implement one or more functions. In other words, the first information is not useless information.

Optionally, the first AM further includes a first boundary part and/or a first identification part. The first boundary part is used to determine a location of the first AM in the data stream, and the first identification part is used to identify a first data stream corresponding to the first AM and/or a PCS lane corresponding to the first AM.

The first padding part includes m fields, where m is an integer greater than 0, and the m fields jointly include the first information or some content of the first information. The m fields may be all or some of fields included in the first padding part, and the m fields are fields agreed upon between the first device and a second device in advance.

For example, the first padding part includes three UPs. All or some of the three UPs include the first information or some content of the first information. Alternatively, the first padding part may further include a pad. When the first padding part includes the pad, the first padding part includes four fields. The four fields include the three UPs and the pad, and one or more fields in the four fields include the first information or some content of the first information.

Optionally, for the plurality of AMs in the AM group, there is at least one AM in the plurality of AMs, the first AM is an AM in the at least one AM, and a padding part of the at least one AM includes the first information.

In step 601, the first device may obtain the data stream in the following first manner or second manner. The first manner and the second manner are described below.

In the first manner, the first device obtains the AM group, where the padding part of the at least one AM in the AM group includes the first information; and inserts the AM group into the data stream.

Before the AM group is inserted into the data stream, the at least one AM in the AM group already includes the first information, and the data stream is a data stream obtained after the first device performs scrambling in a first PCS.

Refer to FIG. 2. In the first PCS of the first device, the first device performs encoding and rate matching on a target data stream from a first reconciliation sublayer, transcodes the processed data stream, scrambles the transcoded data stream, inserts the AM group including the first information into the scrambled data stream, and then continues to perform FEC pre-allocation, FEC encoding, and allocation and interleaving on the data stream with the inserted AM group, to obtain Z data streams. Z is an integer greater than 0, that is, Z may be 1, or may be greater than 1.

An operation of the first device to obtain the AM group may be as follows: The first device generates the AM group, where the padding part of the at least one AM in the AM group includes the first information;
the first device generates the AM group, where the padding part of the at least one AM in the AM group carries pad information; and replaces content carried in the padding part of the at least one AM with the first information, so that the padding part of the at least one AM includes the first information; or
the AM group is stored on the first device, where the padding part of the at least one AM in the AM group carries pad information, and the first device obtains the AM group locally, and replaces content carried in the padding part of the at least one AM with the first information, so that the padding part of the at least one AM includes the first information.

In the second manner, after inserting the AM group into the data stream, the first device replaces, in the data stream, the content carried in the padding part of the at least one AM in the AM group with the first information, so that the padding part of the at least one AM includes the first information.

During implementation, for each AM in the at least one AM, for example, for the first AM, the first device replaces, in the data stream, content carried in the first padding part of the first AM with the first information or some content of the first information.

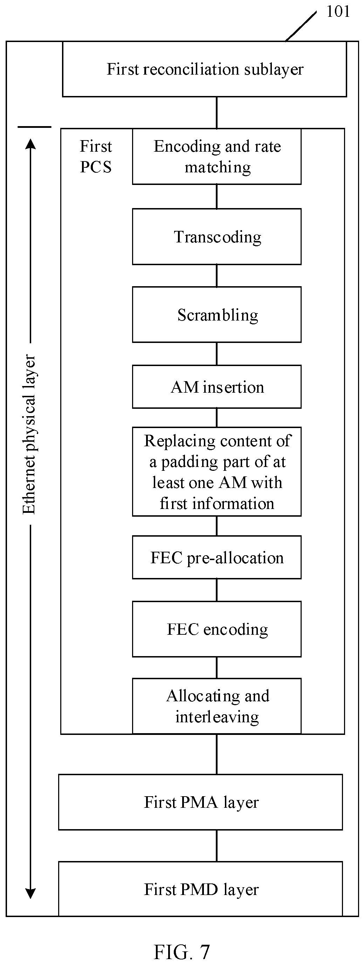

Refer to FIG. 7. In the first PCS of the first device, after scrambling the data stream, the first device inserts the AM group into the scrambled data stream, and replaces, in the data stream, the content carried in the padding part of the at least one AM in the AM group with the first information. Then, FEC pre-allocation, FEC encoding, and allocation and interleaving are performed on the replaced data stream to form the Z data streams.

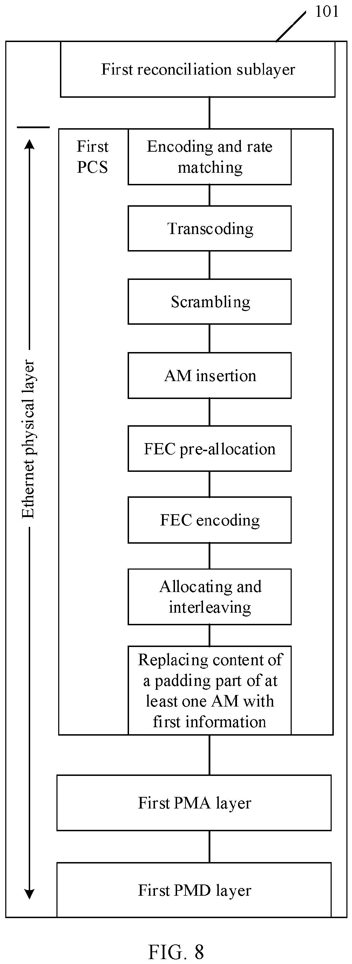

Alternatively, refer to FIG. 8. In the first PCS of the first device, after scrambling the data stream, the first device inserts the AM group into the scrambled data stream, and performs FEC pre-allocation, FEC encoding, and allocation and interleaving on the data stream with the inserted AM group, to form the Z data streams. In the Z data streams, the content carried in the padding part of the at least one AM in the AM group is replaced with the first information.

It can be learned from the foregoing descriptions that the AM group may include the first information before FEC encoding. In this way, the first information may be encoded during FEC encoding, to improve safety during transmission of the first information. Alternatively, the AM group may include the first information after FEC encoding. In this way, FEC encoding does not need to be performed on the first information, thereby reducing an occupied computing resource. Optionally, the at least one AM may include the first information in the following several manners. The manners are described below.

Manner 1: A padding part of each AM in the at least one AM includes a different part of the first information. In other words, the padding part of the at least one AM jointly includes the first information.

For the padding part of each AM, for example, of the first AM, all or some of fields in the first padding part of the first AM include some content of the first information.

When the at least one AM includes one AM, the AM is the first AM, and in this case, the first AM carries the whole first information. A data amount of the first information may be less than or equal to a size of the padding part of the first AM.

Manner 2: The at least one AM may be divided into a plurality of groups. For each AM group, the AM group includes one or more AMs, and the one or more AMs jointly include the first information. In other words, the at least one AM includes a plurality of pieces of first information that are the same.

For example, it is assumed that the at least one AM includes a first AM group and a second AM group. The first AM group includes one or more AMs. A padding part of each AM in the first AM group includes a different part of the first information. In other words, the padding part of the AM in the first AM group jointly includes the first information. The second AM group includes one or more AMs. A padding part of each AM in the second AM group includes a different part of the first information. In other words, the padding part of the AM in the second AM group jointly includes the first information. In this way, the at least one AM includes two same pieces of first information.

For the first information having a high safety requirement, the manner 2 may be used, that is, the at least one AM is used to include a plurality of same pieces of first information. In this way, during transmission of the data stream, even if the first information included in an AM group is lost, the second device can still receive the first information included in another AM group, thereby improving safety during transmission of the first information.

The manner 1 and the manner 2 are merely two examples for including the first information in the at least one AM. During implementation, there may be another manner of including the first information in the at least one AM. Details are not described herein.

In a manner, for each AM in the at least one AM, the padding part of the AM includes at least one field, and all or some of fields in the at least one field are used to include the first information or some content of the first information.

Optionally, the data stream obtained in step 601 includes the Z data streams. Each of the data streams corresponds to one or more AMs in the AM group, and each of the data streams includes one or more AMs corresponding to each of the data streams. For each of the data streams, each AM included in the data stream belongs to a different AM set inserted by the first device. Therefore, the AM group includes one or more AM sets inserted by the first device.

For example, refer to FIG. 3. It is assumed that the AM group includes an AM set 1 and an AM set 2 that are inserted by the first device, each data stream in the Z data streams corresponds to two AMs in the AM group, and each of the data streams includes the two AMs corresponding to each of the data streams. For example, for a data stream 1, the data stream 1 corresponds to an AM 11 and an AM 21 in the AM group, and the data stream 1 includes the AM 11 and the AM 21; for a data stream 2, the data stream 2 corresponds to an AM 12 and an AM 22 in the AM group, and the data stream 2 includes the AM 12 and the AM 22; and..., for a data stream Z, the data stream Z corresponds to an AM 1Z and an AM 2Z in the AM group, and the data stream Z includes the AM 1Z and the AM 2Z.

In step 601, the at least one AM may include the following two types of AMs. The two types of AMs are described below.

For a first type, the at least one AM includes the AM corresponding to the first data stream. In this case, the first information is associated with the first data stream, the Z data streams include the first data stream, and the first AM is an AM corresponding to the first data stream.

Optionally, the at least one AM is entirely in the first data stream.

For the first type of AMs, the at least one AM may include the first information in the manner 1 or the manner 2. The two manners of including detailed content of the first information are described below.

When the at least one AM includes the first information in the manner 1, the padding part of the at least one AM jointly includes the first information. For each AM in the at least one AM, m fields in the padding part of the AM may be used to include some content of the first information, where m is an integer greater than 0. The m fields may be all fields included in the padding part, or may be some of the fields included in the padding part.

The first information includes a plurality of pieces of sub-information. The m fields in the padding part of the AM include m continuous pieces of sub-information, and the m pieces of sub-information is sub-information in the first information. During implementation, it is assumed that a quantity of AMs in the first data stream is N, where N is an integer greater than 0. That is, the at least one AM includes N AMs, and padding parts of the N AMs include N×m fields in total. The N×m fields include N×m continuous pieces of sub-information, and the N×m pieces of sub-information are all sub-information included in the first information, so that the at least one AM jointly includes the first information.

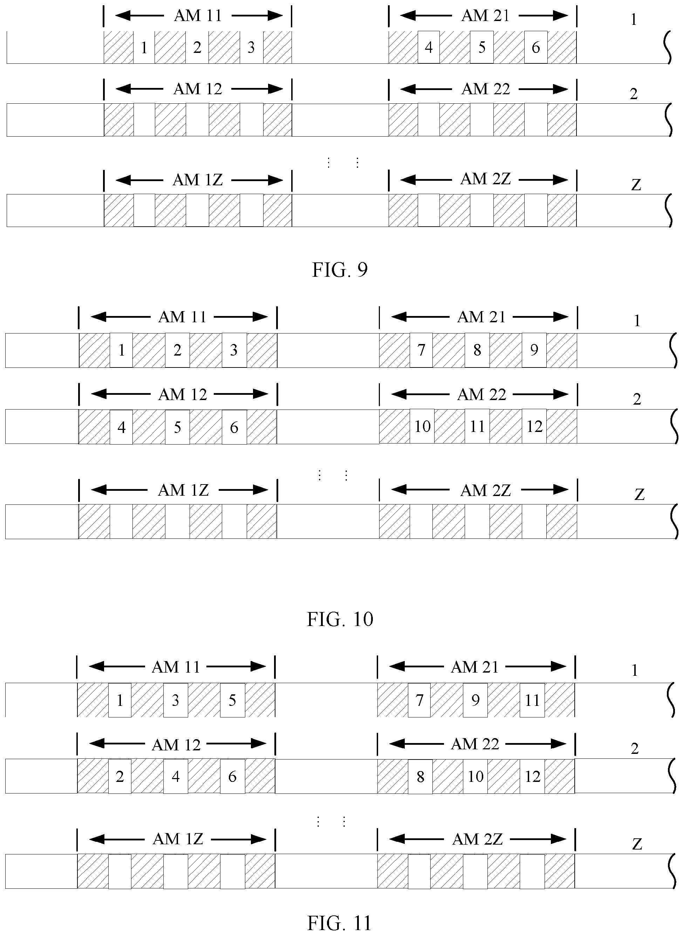

For example, refer to FIG. 9. It is assumed that the first information is associated with a data stream 1, that is, the first data stream is the data stream 1. The at least one AM includes an AM 11 and an AM 21 that correspond to the data stream 1. It is assumed that m=3. In this case, three fields in a padding part of the AM 11 are used to include sub-information 1, sub-information 2, and sub-information 3, and three fields in a padding part of the AM 21 are used to include sub-information 4, sub-information 5, and sub-information 6. The first information includes the sub-information 1, the sub-information 2, the sub-information 3, the sub-information 4, the sub-information 5, and the sub-information 6.

In this manner, an operation of the first device to replace the content carried in the padding part of the at least one AM with the first information may be as follows: The first device separately replaces the content carried in the N×m fields with the N×m pieces of sub-information included in the first information. For example, FIG. 9 is still used as an example. The at least one AM includes the AM 11 and the AM 21, m=3, and the padding parts of the AM 11 and the AM 21 include six fields in total. The first device separately replaces content carried in the six fields with the sub-information 1, the sub-information 2, the sub-information 3, the sub-information 4, the sub-information 5, and the sub-information 6 that are included in the first information.

Optionally, for the foregoing replacement operation, the first device may replace, before inserting the AM group into the data stream, the content carried in the padding part of the at least one AM with the first information, or replace, after inserting the AM group into the data stream, the content carried in the padding part of the at least one AM with the first information.

When the at least one AM includes the first information in the manner 2, the padding part of the at least one AM includes a plurality of pieces of first information that are the same. The at least one AM includes a plurality of groups of AMs. For each AM group, the AM group includes one or more AMs, and the one or more AMs jointly include the first information.

For detailed content of the first information jointly included in the one or more AMs, refer to the detailed content of the first information jointly included in the at least one AM in the manner 1 in a case of the first type of AMs. Details are not described herein again.

For a second type, the Z data streams include M data streams, and the at least one AM includes an AM in the M data streams. That is, the AM in the M data streams includes the first information, the first AM is an AM in the M data streams, and M is an integer greater than 0.

For the second type of AMs, the at least one AM may include the first information in the manner 1 or the manner 2. The two manners of including detailed content of the first information are described below.

When the at least one AM includes the first information in the manner 1, the padding part of the at least one AM jointly includes the first information. For each AM in the at least one AM, m fields in the padding part of the AM may be used to include some content of the first information. The m fields may be all fields included in the padding part, or may be some of the fields included in the padding part.

Each data stream in the at least one data stream includes N AMs, where N is an integer greater than 0. The padding part of the at least one AM includes M×N×m fields, the first information includes M×N×m pieces of sub-information, and the M×N×m fields separately include the M×N×m pieces of sub-information in the first information in the following manner 1 or manner 2.

The manner 1 and the manner 2 are described below.

Manner 1: m first fields include m pieces of first sub-information, and m second fields include m pieces of second sub-information, where the m first fields are fields included in a j^{th} AM in an i^{th} data stream, the m second fields are fields included in a j^{th} AM in an (i+1)^{th} data stream, i=1, 2, ..., or M-1, j=1, 2, ..., or N, and the m pieces of first sub-information and the m pieces of second sub-information are 2m continuous pieces of sub-information included in the first information.

The j^{th} AM in the i^{th} data stream and the j^{th} AM in the (i+1)^{th} data stream belong to a same AM set. For example, refer to FIG. 10. It is assumed that M=2 and m=3. That is, the at least one AM includes AMs in two data streams. It is assumed that the two data streams are a data stream 1 and a data stream 2, and the at least one AM includes an AM 11 and an AM 21 in the data stream 1 and an AM 12 and an AM 22 in the data stream 2. It is further assumed that the first information includes sub-information 1, sub-information 2, sub-information 3, sub-information 4, sub-information 5, sub-information 6, sub-information 7, sub-information 8, sub-information 9, sub-information 10, sub-information 11, and sub-information 12.

In this way, three fields in a padding part of the AM 11 are used to include the sub-information 1, the sub-information 2, and the sub-information 3, three fields in a padding part of the AM 12 are used to include the sub-information 4, the sub-information 5, and the sub-information 6, three fields in a padding part of the AM 21 are used to include the sub-information 7, the sub-information 8, and the sub-information 9, and three fields in a padding part of the AM 22 are used to include the sub-information 10, the sub-information 11, and the sub-information 12.

In this manner, the operation of the first device to replace the content carried in the padding part of the at least one AM with the first information may be as follows:
For one AM in the at least one AM, the first device obtains, in the first information, m continuous pieces of sub-information corresponding to the AM, and replaces content carried in m fields in a padding part of the AM with the m pieces of sub-information. The first device repeats the replacement process, and an order of replacing AMs is a j^{th} AM in a first data stream, a j^{th} AM in a second data stream, ..., and a j^{th} AM in an M^{th} data stream, where a value of j is 1, 2, ..., or N sequentially.

During implementation, the first device starts to obtain m continuous pieces of sub-information in a first piece of sub-information included in the first information, and for m fields included in a padding part of a first AM corresponding to the first data stream, replaces content carried in the m fields with the m obtained pieces of sub-information, m continuous pieces of sub-information are obtained in remaining sub-information included in the first information, and for m fields included in a padding part of a first AM corresponding to the second data stream, content carried in the m fields is replaced with the m obtained pieces of sub-information, and so on. m continuous pieces of sub-information are obtained in remaining sub-information included in the first information, and for m fields included in a padding part of a first AM corresponding to the M^{th} data stream, content carried in the m fields is replaced with the m obtained pieces of sub-information.
m continuous pieces of sub-information are obtained in remaining sub-information included in the first information, and for m fields included in a padding part of a second AM corresponding to the first data stream, content carried in the m fields is replaced with the m obtained pieces of sub-information. The foregoing process is repeated until last m pieces of sub-information included in the first information are obtained, and for m fields included in a padding part of an N^{th} AM corresponding to the M^{th} data stream, content carried in the m fields is replaced with the m obtained pieces of sub-information.

For example, FIG. 10 is still used as an example. It is assumed that M is 2, and it is assumed that the M data streams include the data stream 1 and the data stream 2. The at least one AM includes the AM 11 and the AM 12 that correspond to the data stream 1, and the AM 21 and the AM 22 that correspond to the data stream 2. The first device obtains the sub-information 1, the sub-information 2, and the sub-information 3 in the first information, and for the three fields included in the padding part of the AM 11, replaces content carried in the three fields with the obtained sub-information 1, sub-information 2, and sub-information 3. The sub-information 4, the sub-information 5, and the sub-information 6 are obtained in remaining sub-information included in the first information. For the three fields included in the padding part of the AM 21, content carried in the three fields is replaced with the selected sub-information 4, sub-information 5, and sub-information 6. The sub-information 7, the sub-information 8, and the sub-information 9 are obtained in the first information. For the three fields included in the padding part of the AM 21, content carried in the three fields is replaced with the obtained sub-information 7, sub-information 8, and sub-information 9. The sub-information 10, the sub-information 11, and the sub-information 12 are obtained in remaining sub-information included in the first information. For the three fields included in the padding part of the AM 22, content carried in the three fields is replaced with the selected sub-information 10, sub-information 11, and sub-information 12.

Manner 2: M fields include M continuous pieces of sub-information, where the M fields include an n^{th} field in a j^{th} AM in each data stream in the M data streams, n=1, 2, ..., or m, and the first information includes the M pieces of sub-information.
j^{th} AMs in data streams in the M data streams belong to a same AM set.

For example, refer to FIG. 11. It is assumed that M=2 and m=3. That is, the at least one AM includes AMs in two data streams. It is assumed that the two data streams are a data stream 1 and a data stream 2, and the at least one AM includes an AM 11 and an AM 21 in the data stream 1 and an AM 12 and an AM 22 in the data stream 2. It is further assumed that the first information includes sub-information 1, sub-information 2, sub-information 3, sub-information 4, sub-information 5, sub-information 6, sub-information 7, sub-information 8, sub-information 9, sub-information 10, sub-information 11, and sub-information 12.

In this case, a first field in a padding part of the AM 11 and a first field in a padding part of the AM 12 are used to include the sub-information 1 and the sub-information 2 respectively. A second field in the padding part of the AM 11 and a second field in the padding part of the AM 12 are used to include the sub-information 3 and the sub-information 4 respectively. A third field in the padding part of the AM 11 and a third field in the padding part of the AM 12 are used to include the sub-information 5 and the sub-information 6 respectively. A first field in a padding part of the AM 21 and a first field in a padding part of the AM 22 are used to include the sub-information 7 and the sub-information 8 respectively. A second field in the padding part of the AM 21 and a second field in the padding part of the AM 22 are used to include the sub-information 9 and the sub-information 10 respectively. A third field in the padding part of the AM 21 and a third field in the padding part of the AM 22 are used to include the sub-information 11 and the sub-information 12 respectively. In this manner, the operation of the first device to replace the content carried in the padding part of the at least one AM with the first information may be as follows:
The first device obtains, in the first information, M fields corresponding to M pieces of sub-information, where the M fields include the n^{th} field in a padding part of the j^{th} AM in each of the data streams, a value of j is 1, 2, ..., or N sequentially, and a value of n is 1, 2, ..., or m sequentially; and replaces content carried in the M fields with the M pieces of sub-information.

During implementation, M continuous pieces of sub-information start to be obtained in a first piece of sub-information included in the first information, and M fields are determined. The M fields include a first field in a padding part of a first AM corresponding to each of the data streams, and content carried in the M fields is replaced with the M pieces of sub-information. The first device obtains M continuous pieces of sub-information in remaining sub-information included in the first information, and determines M fields. The M fields include a second field in the padding part of the first AM corresponding to each of the data streams, and content carried in the M fields is replaced with the M pieces of sub-information, and so on. The first device obtains M continuous pieces of sub-information in remaining sub-information included in the first information, and determines M fields. The M fields include an m^{th} field in the padding part of the first AM corresponding to each of the data streams, and content carried in the M fields is replaced with the M pieces of sub-information.

The first device obtains M continuous pieces of sub-information in remaining sub-information included in the first information, and determines M fields. The M fields include a first field in a padding part of a second AM corresponding to each of the data streams, and content carried in the M fields is replaced with the M pieces of sub-information. The foregoing process is repeated until last M pieces of sub-information included in the first information are obtained, and M fields are determined. The M fields include an m^{th} field in a padding part of an N^{th} AM corresponding to each of the data streams, and content carried in the M fields is replaced with the M pieces of sub-information.

For example, FIG. 11 is still used as an example. It is assumed that M is 2, and it is assumed that the M data streams include the data stream 1 and the data stream 2. The at least one AM includes the AM 11 and the AM 12 that correspond to the data stream 1, and the AM 21 and the AM 22 that correspond to the data stream 2. The first device obtains the sub-information 1 and the sub-information 2 in the first information, determines the two fields, where the two fields include a first field in the padding part of the AM 11 and a first field in the padding part of the AM 12, and replaces content carried in the two fields with the sub-information 1 and the sub-information 2. The sub-information 3 and the sub-information 4 are obtained in the first information, and the two fields are determined, where the two fields include a second field in the padding part of the AM 11 and a second field in the padding part of the AM 12, and content carried in the two fields is replaced with the sub-information 3 and the sub-information 4. The sub-information 5 and the sub-information 6 are obtained in the first information, and the two fields are determined, where the two fields include a third field in the padding part of the AM 11 and a third field in the padding part of the AM 12, and content carried in the two fields is replaced with the sub-information 5 and the sub-information 6. The sub-information 7 and the sub-information 8 are obtained in the first information, and the two fields are determined, where the two fields include a first field in the padding part of the AM 21 and a first field in the padding part of the AM 22, and content carried in the two fields is replaced with the sub-information 7 and the sub-information 8. The sub-information 9 and the sub-information 10 are obtained in the first information, and the two fields are determined, where the two fields include a second field in the padding part of the AM 21 and a second field in the padding part of the AM 22, and content carried in the two fields is replaced with the sub-information 9 and the sub-information 10. The sub-information 11 and the sub-information 12 are obtained in the first information, and the two fields are determined, where the two fields include a third field in the padding part of the AM 11 and a third field in the padding part of the AM 12, and content carried in the two fields is replaced with the sub-information 11 and the sub-information 12.

When the at least one AM includes the first information in the manner 2, the at least one AM includes a plurality of pieces of first information that are the same. The at least one AM includes a plurality of groups of AMs. For each AM group, the AM group includes one or more AMs, and the one or more AMs jointly include the first information.

For detailed content of the first information jointly included in the one or more AMs, refer to the detailed content of the first information jointly included in the at least one AM in the manner 1 in a case of the second type of AMs. Details are not described herein again.

Step 602: The first device sends the data stream to the second device.

Refer to FIG. 2, FIG. 7, or FIG. 8. In step 601, after the first device obtains the Z data streams, the first device combines, at a first PMA layer of the first device, the Z data streams into X data streams. At a first PMD layer of the first device, the first device sends the X data streams to the second device through X physical channels between the first device and the second device.

In this embodiment of this application, because the second device does not use the pad information included in the padding part of each of the AMs in the AM group, for the second device, the pad information is useless information, and the padding part of each of the AMs is wasted. Therefore, the first device may use the padding part of the at least one AM in the AM group to include the first information, and then send, to the second device, the data stream including the AM group. In this way, the second device receives the data stream, and can obtain the first information in the AM group, thereby implementing a new manner of sending information. Because the padding part of the AM is used to include the first information, there is not any influence on a useful part of the data stream, so that an out-of-band bandwidth resource is well used to send the first information. In addition, in each of the data streams, because the AMs are distributed in the data stream at regular intervals, that is, the first device sends the AMs in the data stream periodically, time for sending the AMs is stable. In this way, information that has a relatively high requirement on time stability and reliability may be sent by using the padding part of the AM.

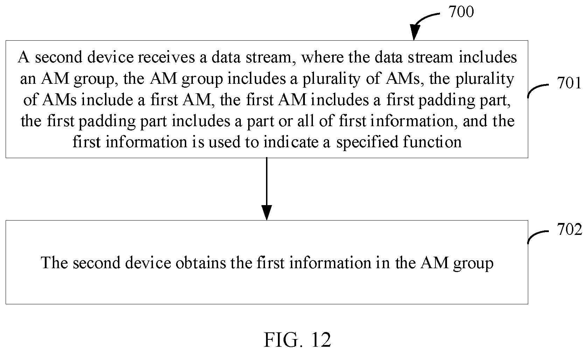

Refer to FIG. 12. An embodiment of this application provides a communication method 700. The method 700 is applied to the network architecture 100 shown in FIG. 1 or FIG. 2. The method 700 may be performed by the second device 102 in the network architecture 100 shown in FIG. 1 or FIG. 2. The method 700 includes the following steps.

Step 701: A second device receives a data stream, where the data stream includes an AM group, the AM group includes a plurality of AMs, the plurality of AMs include a first AM, the first AM includes a first padding part, the first padding part includes a part or all of first information, and the first information is used to indicate a specified function.

Optionally, the first AM further includes a first boundary part and/or a first identification part. The first boundary part is used to determine a location of the first AM in the data stream, and the first identification part is used to identify a first data stream corresponding to the first AM and/or a PCS lane corresponding to the first AM.

Optionally, for the plurality of AMs in the AM group, there is at least one AM in the plurality of AMs, the first AM is an AM in the at least one AM, and a padding part of the at least one AM includes the first information.

The padding part of the at least one AM includes detailed content of the first information. For details, refer to related content in step 601 in the method 600 shown in FIG. 6. Details are not described herein again.

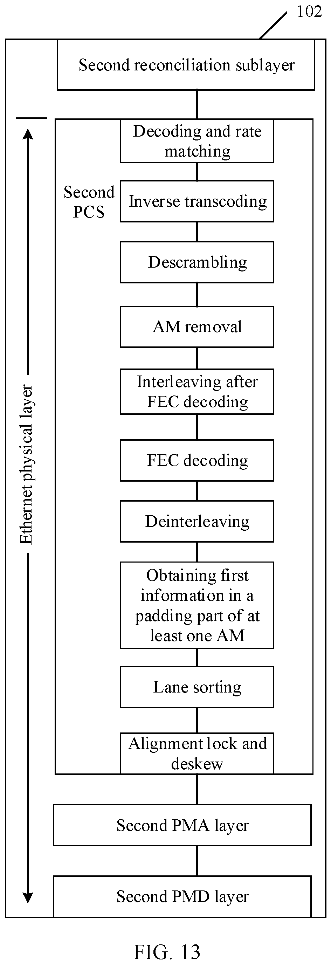

Refer to FIG. 13, FIG. 14, or FIG. 15. In step 701, at a second PMD layer of the second device, the second device receives X data streams through X physical channels between a first device and the second device. At a first PMA layer of the second device, the second device restores Z data streams based on the X data streams.

Step 702: The second device obtains the first information in the AM group.

The at least one AM may include the following two types of AMs. The two types of AMs are described below.

For a first type, the at least one AM includes the AM in the first data stream. In this case, the first information is associated with the first data stream, the Z data streams include the first data stream, and the first AM is an AM in the at least one AM. In this way, when obtaining the first data stream, the second device obtains the first information in the padding part of the at least one AM in the first data stream.

The first data stream includes N AMs, that is, the at least one AM includes the N AMs. Optionally, the at least one AM may include the first information in the foregoing manner 1 or manner 2. Implementation processes in which the second device obtains the first information in the two manners are described below.

When the at least one AM includes the first information in the manner 1, the padding part of the at least one AM jointly includes the first information, the padding part of the at least one AM includes N×m fields in total, and the N×m fields include N×m continuous pieces of sub-information. In step 702, the second device obtains the N×m continuous pieces of sub-information in the N×m fields, to obtain the first information.

For example, refer to FIG. 9. It is assumed that the first information is associated with a data stream 1, that is, the first data stream is the data stream 1. The at least one AM includes an AM 11 and an AM 21 that correspond to the data stream 1. A padding part of the AM 11 and a padding part of the AM 21 include six fields in total. The second device obtains sub-information 1, sub-information 2, sub-information 3, sub-information 4, sub-information 5, and sub-information 6 in the six fields, to obtain the first information.

When the at least one AM includes the first information in the manner 2, the at least one AM includes a plurality of groups of AMs. For each AM group, the AM group includes one or more AMs, and the one or more AMs jointly include the first information. The second device obtains the first information in one or more groups of AMs in the plurality of groups of AMs.

For any group of AMs, for a detailed implementation process in which the second device obtains the first information in the AM group, refer to the detailed implementation process in which the second device obtains the first information in the padding part of the at least one AM in the manner 1 in a case of the first type of AMs. Details are not described herein again.

For a second type, the Z data streams include M data streams, and the at least one AM includes an AM in the M data streams. In this way, when obtaining the Z data streams, the second device obtains the first information in the padding part of the at least one AM in the Z data streams.

For the M data streams, each of the data streams includes N AMs, and the at least one AM includes M×N AMs in total.

Optionally, the at least one AM may include the first information in the foregoing manner 1 or manner 2. Implementation processes in which the second device obtains the first information in the two manners are described below.

When the at least one AM includes the first information in the manner 1, the padding part of the at least one AM jointly includes the first information.

The first information includes M×N×m pieces of sub-information, and the padding part of the at least one AM includes M×N×m fields. The M×M×m fields separately include the M×N×m pieces of sub-information in the first information in the foregoing manner 1 or manner 2. The processes in which the second device obtains the first information in the foregoing manner 1 or manner 2 are described below.

When the M×N×m fields include the M×N×m pieces of sub-information in the first information in the manner 1, the second device obtains m continuous pieces of sub-information in a padding part of a j^{th} AM in an i^{th} data stream, where i=1, 2, ..., or M, and j=1, 2, ..., or N. The second device repeats the foregoing process until the entire first information is obtained.

During implementation, the second device obtains m pieces of sub-information in a padding part of a first AM in a first data stream, obtains m pieces of sub-information in a first AM in a second data stream, ..., and obtains m pieces of sub-information in a first AM in an M^{th} data stream. m pieces of sub-information are obtained in a second AM in the first data stream. The foregoing process is repeated until m pieces of sub-information are obtained in an N^{th} AM in the M^{th} data stream, to obtain the first information.

For example, refer to FIG. 10. It is assumed that M is 2 and m is 3, and it is assumed that the M data streams include a data stream 1 and a data stream 2. The at least one AM includes an AM 11 and an AM 12 that correspond to the data stream 1, and an AM 21 and an AM 22 that correspond to the data stream 2. The second device obtains sub-information 1, sub-information 2, and sub-information 3 in a padding part of the AM 11 in a first data stream; obtains sub-information 4, sub-information 5, and sub-information 6 in a padding part of the AM 12 in a second data stream; obtains sub-information 7, sub-information 8, and sub-information 9 in a padding part of the AM 21 in the first data stream; and obtains sub-information 10, sub-information 11, and sub-information 12 in a padding part of the AM 22 in the second data stream.

When the M×N×m fields include the M×N×m pieces of sub-information in the first information in the manner 2, the second device determines M fields, where the M fields include an n^{th} field in a j^{th} AM in each data stream in the M data streams, j=1, 2, ..., or N, and n=1, 2, ..., or m, and obtains the M continuous pieces of sub-information in the M fields. The foregoing process is repeated until the entire first information is obtained.

For example, refer to FIG. 11. It is assumed that M=2 and m=3, and it is assumed that the M data streams are a data stream 1 and a data stream 2, and the at least one AM includes an AM 11 and an AM 21 in the data stream 1 and an AM 12 and an AM 22 in the data stream 2. The second device determines two fields, where the two fields include a first field in a padding part of the AM 11 and a first field in a padding part of the AM 12, and obtains the sub-information 1 and the sub-information 2 in the two fields. Two fields are determined. The two fields include a second field in the padding part of the AM 11 and a second field in the padding part of the AM 12, and the sub-information 3 and the sub-information 4 are obtained in the two fields. Two fields are determined. The two fields include a third field in the padding part of the AM 11 and a third field in the padding part of the AM 12, and the sub-information 5 and the sub-information 6 are obtained in the two fields.

Two fields are determined. The two fields include a first field in a padding part of the AM 21 and a first field in a padding part of the AM 22, and the sub-information 7 and the sub-information 8 are obtained in the two fields. Two fields are determined. The two fields include a second field in the padding part of the AM 21 and a second field in the padding part of the AM 22, and the sub-information 9 and the sub-information 10 are obtained in the two fields. Two fields are determined. The two fields include a third field in the padding part of the AM 11 and a third field in the padding part of the AM 12, and the sub-information 11 and the sub-information 12 are obtained in the two fields.

When the at least one AM includes the first information in the manner 2, the at least one AM includes a plurality of groups of AMs. For each AM group, the AM group includes one or more AMs, and the one or more AMs jointly include the first information. The second device obtains the first information in one or more groups of AMs in the plurality of groups of AMs.

For any group of AMs, for a detailed implementation process in which the second device obtains the first information in the AM group, refer to the detailed implementation process in which the second device obtains the first information in the padding part of the at least one AM in the manner 1 in a case of the second type of AMs. Details are not described herein again.

In step 702, in a second PCS of the second device, the second device may obtain the first information in the AM group in the following three different cases. Each of the three different cases is described below.

Refer to FIG. 13. In a first case, after sorting the Z data streams, the second device obtains the first information in the AM group in the sorted Z data streams.

Refer to FIG. 13. In this case, the second device first performs alignment lock and deskew on the Z data streams from a second PMA layer, to align the Z data streams, and sorts the aligned Z data stream lanes.

After performing lane sorting and before deinterleaving the sorted Z data streams, the second device obtains the first information in the AM group in the sorted Z data streams. After obtaining the first information, the second device deinterleaves the sorted Z data streams to obtain at least one first code word and at least one second code word. FEC decoding is performed on the at least one first code word and the at least one second code word to obtain at least one first data block and at least one second data block. Interleaving after FEC decoding is performed on the at least one first data block and the at least one second data block to obtain one data stream. The data stream includes the AM group. The AM set is removed from the data stream, the data stream from which the AM set is removed is descrambled, inverse transcoding is performed on the descrambled data stream, and decoding and rate matching are performed on the data stream on which inverse transcoding is performed, to restore the target data stream. A target data stream is input into a second reconciliation sublayer.

After sorting the aligned Z data stream lanes, the second device obtains an AM included in each data stream in the Z data streams, and identifies the AM included in each of the data streams, to obtain the first information in the AM group in the sorted Z data streams.

In the first case, the first information is obtained in the AM group in the sorted Z data streams, that is, the first information is obtained before FEC decoding is performed. In this way, the first information does not need to be decoded, reducing occupation of a computing resource.

Correspondingly, when sending the first information, the first device does not need to perform FEC encoding on the first information, further reducing occupation of a computing resource of the first device.

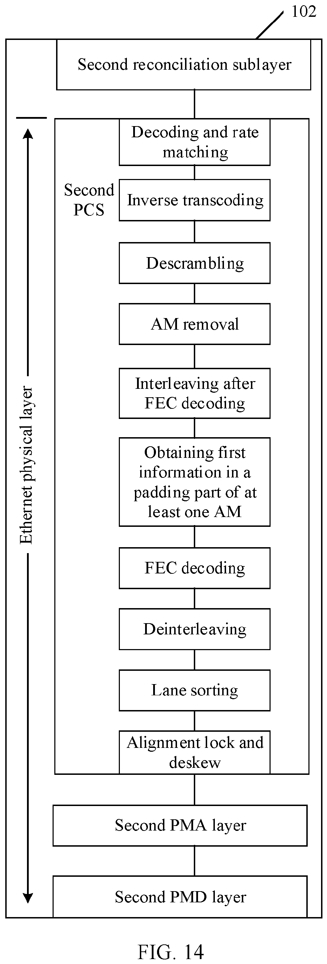

Refer to FIG. 14. In a second case, when the second device decodes the sorted Z data streams and obtains at least one first data block and at least one second data block, the at least one first data block and the at least one second data block jointly include the first information, and the first information is obtained in the at least one first data block and the at least one second data block. In this case, refer to FIG. 14. The second device first performs alignment lock and deskew on the Z data streams from the second PMA layer, to align the Z data streams; and sorts the aligned Z data stream lanes, deinterleaves the sorted Z data streams to obtain at least one first code word and at least one second code word, and performs FEC decoding on the at least one first code word and the at least one second code word to obtain at least one first data block and at least one second data block.

After obtaining the at least one first data block and the at least one second data block, and before performing interleaving, after FEC decoding, on the at least one first data block and the at least one second data block to obtain one data stream, the second device obtains the first information in the at least one first data block and the at least one second data block. After obtaining the first information, the second device performs interleaving, after FEC decoding, on the at least one first data block and the at least one second data block to obtain one data stream. The data stream includes the AM group. The second device removes the AM set from the data stream, descrambles the data stream from which the AM set is removed, performs inverse transcoding on the descrambled data stream, and decodes and performs rate matching on the data stream on which inverse transcoding is performed, to restore the target data stream. A target data stream is input into a second reconciliation sublayer.

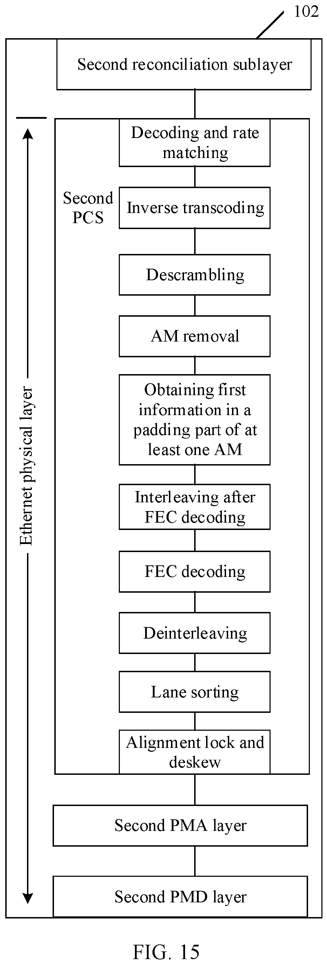

Refer to FIG. 15. In a third case, when the second device obtains one data stream based on the at least one first data block and the at least one second data block, the data stream includes the AM group, and the first information is obtained in the AM group in the data stream.

In this case, refer to FIG. 15. The second device first performs alignment lock and deskew on the Z data streams from the second PMA layer, to align the Z data streams; and sorts the aligned Z data stream lanes, deinterleaves the sorted Z data streams to obtain at least one first code word and at least one second code word, and performs interleaving, after FEC decoding, on at least one first data block and at least one second data block to obtain one data stream.

Before obtaining the data stream and removing the AM group from the data stream, the second device obtains the first information in the AM group in the data stream. After obtaining the first information, the second device removes the AM group from the data stream. The data stream from which the AM group is removed is descrambled, inverse transcoding is performed on the descrambled data stream, and decoding and rate matching are performed on the data stream on which inverse transcoding is performed, to restore the target data stream. A target data stream is input into a second reconciliation sublayer.

In the second case or the third case, the first information is obtained in the AM group after FEC decoding is performed. Correspondingly, when sending the first information, the first device may perform FEC encoding on the first information, to improve safety during transmission of the first information.

In this embodiment of this application, because the second device does not use the pad information included in the padding part of each of the AMs in the AM group, for the second device, the pad information is useless information, and the padding part of each of the AMs is wasted. Therefore, for the AM group included in the data stream received by the second device, a padding part of at least one AM in the AM group is used to include the first information. In this way, the second device receives the data stream, and can obtain the first information in the AM group, thereby implementing a new manner of sending information. Because the padding part of the AM is used to include the first information, there is not any influence on a useful part of the data stream, so that an out-of-band bandwidth resource is well used to send the first information. In addition, in each of the data streams, because the AMs are distributed in the data stream at regular intervals, that is, the first device sends the AMs in the data stream periodically, time for sending the AMs is stable. In this way, information that has a relatively high requirement on time stability and reliability may be sent by using the padding part of the AM.

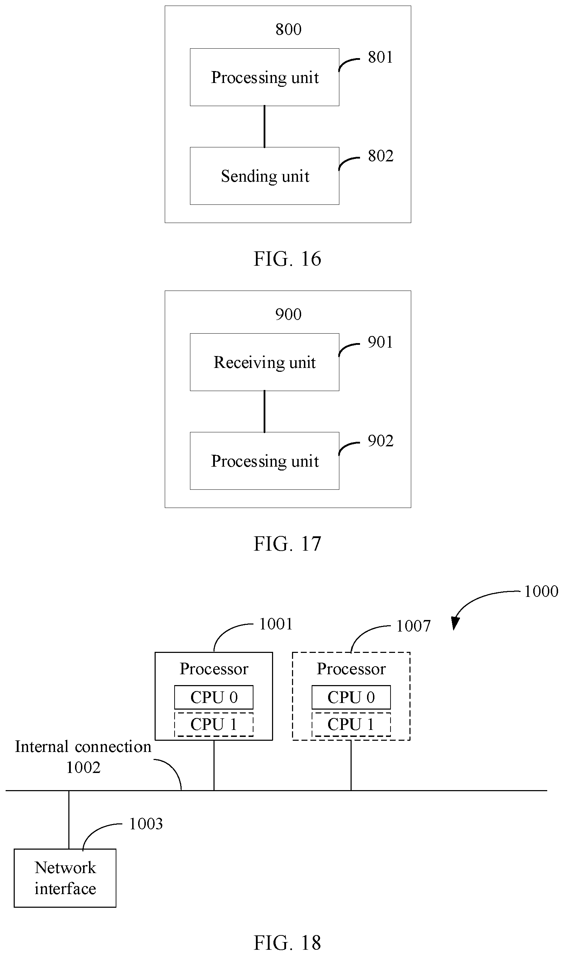

Refer to FIG. 16. An embodiment of this application provides a communication apparatus 800. The communication apparatus 800 may be deployed on the first device according to any one of the foregoing embodiments, for example, deployed on the first device 101 in the network architecture 100 shown in FIG. 1 or FIG. 2, or deployed on the first device in the method 600 shown in FIG. 6. The apparatus includes:
a processing unit 801, configured to obtain a data stream, where the data stream includes an alignment marker AM group, the AM group includes a plurality of AMs, the plurality of AMs include a first AM, the first AM includes a first boundary part and a first padding part, the first padding part includes a part or all of first information, the first information is used to indicate a specified function, and the first boundary part is used to determine a location of the first AM in the data stream; and
a sending unit 802, configured to send the data stream.

Optionally, for a detailed implementation process in which the processing unit 801 obtains the data stream, refer to related content in step 601 in the method 600 shown in FIG. 6. Details are not described herein again.

Optionally, for a detailed implementation process in which the sending unit 802 sends the data stream, refer to related content in step 602 of the method 600 shown in FIG. 6. Details are not described herein again.

Optionally, there are a plurality of obtained data streams, each of the data streams corresponds to one or more AMs in the AM group, and each of the data streams includes one or more AMs corresponding to each of the data streams.

Optionally, the first information is associated with a first data stream, the plurality of data streams include the first data stream, an AM in the first data stream includes the first information, and the first AM is an AM in the first data stream.

Optionally, the plurality of data streams include M data streams, an AM in the M data streams includes the first information, the first AM is an AM in the M data streams, and M is an integer greater than 0.

Optionally, a padding part of each AM in the M data streams includes m fields, m is an integer greater than 0, and the first information includes at least one piece of sub-information.

m first fields include m pieces of first sub-information, and m second fields include m pieces of second sub-information. The m first fields are fields included in a j^{th} AM in an i^{th} data stream, and the m second fields are fields included in a j^{th} AM in an (i+1)^{th} data stream, where i=1, 2, ..., or M-1, j=1, 2, ..., or N, N is a quantity of AMs in the i^{th} data stream, and the m pieces of first sub-information and the m pieces of second sub-information are 2m continuous pieces of sub-information included in the first information.

Optionally, for detailed content about the m first fields including the m pieces of first sub-information and the m second fields including the m pieces of second sub-information, refer to related content in step 601 in the method 600 shown in FIG. 6. Details are not described herein again.

Optionally, M fields include M continuous pieces of sub-information, and the M fields include an n^{th} field in a j^{th} AM in each data stream in the M data streams, where n=1, 2, ..., or m, and the first information includes the M pieces of sub-information.

Optionally, for detailed content about the M fields including the M continuous pieces of sub-information, refer to related content in step 601 in the method 600 shown in FIG. 6. Details are not described herein again.

Optionally, the m fields in the padding part of each of the AMs include a unique pad UP and/or a pad Pad.

Optionally, the processing unit 801 is configured to:
obtain the AM group, where the AM group includes the first AM, and the first padding part of the first AM includes the first information or the part of the first information; and insert the AM group into a second data stream to obtain the data stream.

Optionally, the processing unit 801 is configured to:
when the AM group is inserted into the data stream, and the inserted AM group includes the first AM, replace, in the data stream, content carried in the first padding part of the first AM with the first information or the part of the first information.

Optionally, for a detailed implementation process in which the processing unit 801 replaces the content carried in the first padding part with the first information or the part of the first information, refer to related content in step 601 in the method 600 shown in FIG. 6. Details are not described herein again.

Optionally, the first AM further includes a first identification part, and the first identification part is used to indicate a data stream corresponding to the first AM.

In this embodiment of this application, for each of the AMs in the AM group, a recipient of the data stream does not use pad information included in a padding part of each of the AMs, and the pad information is useless information for the recipient. Therefore, when the data stream is sent, the processing unit may replace pad information included in the first padding part of the first AM in the AM group with the first information or some content of the first information, so that the first padding part includes the first information or some content of the first information. In this way, when receiving the data stream, the recipient obtains the first information in the AM group, thereby implementing a new manner of sending information. Because the sending unit uses the padding part of the AM to send the first information, the recipient performs the specified function based on the first information, without any influence on the data stream, so that an out-of-band bandwidth resource is well used to send the first information, thereby reducing a waste of the bandwidth resource. In addition, in the data stream, because the AMs are distributed in the data stream at regular intervals, that is, the sending unit sends the AMs in the data stream periodically, time for sending the AMs is stable. In this way, information that has a relatively high requirement on time stability and reliability may be sent by using the padding part of the AM.

Refer to FIG. 17. An embodiment of this application provides a communication apparatus 900. The communication apparatus 900 may be deployed on the second device according to any one of the foregoing embodiments, for example, deployed on the second device 102 in the network architecture 100 shown in FIG. 1 or FIG. 2, or deployed on the second device in the method 700 shown in FIG. 12. The apparatus includes:
a receiving unit 901, configured to receive a data stream, where the data stream includes an alignment marker AM group, the AM group includes a plurality of AMs, the plurality of AMs include a first AM, the first AM includes a first boundary part and a first padding part, the first padding part includes a part or all of first information, the first information is used to indicate a specified function, and the first boundary part is used to determine a location of the first AM in the data stream; and
a processing unit 902, configured to obtain the first information in the AM group. Optionally, for a detailed implementation process in which the receiving unit 901 receives the data stream, refer to related content in step 701 in the method 700 shown in FIG. 12. Details are not described herein again.

Optionally, for a detailed implementation process in which the processing unit 902 obtains the first information, refer to related content in step 702 in the method 700 shown in FIG. 12. Details are not described herein again.

Optionally, there are a plurality of received data streams, each of the data streams corresponds to one or more AMs in the AM group, and each of the data streams includes one or more AMs corresponding to each of the data streams.

Optionally, the first information is associated with a first data stream, the plurality of data streams include the first data stream, an AM in the first data stream includes the first information, and the first AM is an AM in the first data stream.

Optionally, the plurality of data streams include M data streams, an AM in the M data streams includes the first information, the first AM is an AM in the M data streams, and M is an integer greater than 0.

Optionally, a padding part of each AM in the M data streams includes m fields, m is an integer greater than 0, and the first information includes at least one piece of sub-information, m first fields include m pieces of first sub-information, and m second fields include m pieces of second sub-information. The m first fields are fields included in a j^{th} AM in an i^{th} data stream, and the m second fields are fields included in a j^{th} AM in an (i+1)^{th} data stream, where i=1, 2, ..., or M-1, j=1, 2, ..., or N, N is a quantity of AMs in the i^{th} data stream, and the m pieces of first sub-information and the m pieces of second sub-information are 2m continuous pieces of sub-information included in the first information.

Optionally, for detailed content about the m first fields including the m pieces of first sub-information and the m second fields including the m pieces of second sub-information, refer to related content in step 601 in the method 600 shown in FIG. 6. Details are not described herein again.

Optionally, M fields include M continuous pieces of sub-information, and the M fields include an n^{th} field in a j^{th} AM in each data stream in the M data streams, where n=1, 2, ..., or m, and the first information includes the M pieces of sub-information.

Optionally, for detailed content about the M fields including the M continuous pieces of sub-information, refer to related content in step 601 in the method 600 shown in FIG. 6. Details are not described herein again.

Optionally, the m fields in the padding part of each of the AMs include a unique pad UP and/or a pad Pad.

Optionally, there are a plurality of received data streams, and the processing unit 902 is configured to:
after the plurality of data streams are sorted, obtain the first information in the AM group in the plurality of sorted data streams.

Optionally, for a detailed implementation process in which the processing unit 902 obtains the first information in the AM groups in the plurality of sorted data streams, refer to related content in step 702 in the method 700 shown in FIG. 12. Details are not described herein again.

Optionally, the processing unit 902 is configured to:
obtain the first information in at least one first data block and at least one second data block when the at least one first data block and the at least one second data block are obtained by decoding the plurality of sorted data streams, where the at least one first data block and the at least one second data block jointly include the first information.

Optionally, for a detailed implementation process in which the processing unit 902 obtains the first information in the at least one first data block and the at least one second data block, refer to related content in step 702 in the method 700 shown in FIG. 12. Details are not described herein again. Optionally, the processing unit 902 is configured to:
obtain the first information in an AM group in one data stream when the at least one first data block and the at least one second data block are interleaved to obtain the data stream.

Optionally, for a detailed implementation process in which the processing unit 902 obtains the first information in the AM group in the data stream, refer to related content in step 702 in the method 700 shown in FIG. 12. Details are not described herein again.

Optionally, the first AM further includes a first identification part, and the first identification part is used to indicate a data stream including the first AM.

In this embodiment of this application, for each of the AMs in the AM group, a recipient of the data stream does not use pad information included in a padding part of each of the AMs, and the pad information is useless information for the recipient. Therefore, in the data stream, pad information included in the first padding part of the first AM in the AM group may be replaced with the first information or some content of the first information, so that the first padding part includes the first information or some content of the first information. In this way, when the data stream is received, the first information in the AM group is obtained, thereby implementing a new manner of sending information. Because the padding part of the AM is used to include the first information, the specified function is performed based on the first information after the data stream is received, without any influence on the data stream, so that an out-of-band bandwidth resource is well used to send the first information, thereby reducing a waste of the bandwidth resource. In addition, in the data stream, because the AMs are distributed in the data stream at regular intervals, that is, a sender sends the AMs in the data stream periodically, time for sending the AMs is stable. In this way, information that has a relatively high requirement on time stability and reliability may be sent by using the padding part of the AM.

FIG. 18 is a schematic diagram of a communication device 1000 according to an embodiment of this application. The communication device 1000 may be the first device according to any one of the foregoing embodiments, for example, may be the first device 101 in the network architecture 100 shown in FIG. 1 or FIG. 2, or the first device in the method 600 shown in FIG. 6. The communication device 1000 includes at least one processor 1001, an internal connection 1002, and at least one network interface 1003.

The communication device 1000 is an apparatus having a hardware structure.

In some embodiments, the communication device 1000 may be configured to implement a functional module in the apparatus 800 in FIG. 16. For example, a person skilled in the art may figure out that the processing unit 801 in the apparatus 800 in FIG. 16 may be implemented by the at least one processor 1001 by invoking computer program code, and the sending unit 802 in the apparatus 800 in FIG. 16 may be implemented by the at least one network interface 1003.

The communication device 1000 may be further configured to implement a function of the first device according to any one of the foregoing embodiments.

The processor 1001 is, for example, a general-purpose central processing unit (Central Processing Unit, CPU), a digital signal processor (Digital Signal Processor, DSP), a network processor (Network Processor, NP), a graphics processing unit (Graphics Processing Unit, GPU), a neural-network processing unit (Neural-network Processing Unit, NPU), a data processing unit (Data Processing Unit, DPU), a microprocessor, or one or more integrated circuits configured to implement the solutions of this application. For example, the processor 701 includes an application-specific integrated circuit (Application-specific Integrated Circuit, ASIC), a programmable logic device (Programmable Logic Device, PLD) or another programmable logic device, a transistor logic device, a hardware component, or any combination thereof. The PLD is, for example, a complex programmable logic device (Complex Programmable Logic Device, CPLD), a field programmable gate array (Field Programmable Gate Array, FPGA), a generic array logic (Generic Array Logic, GAL), or any combination thereof. The processor may implement or execute various logical blocks, modules, and circuits described with reference to content disclosed in embodiments of this application. Alternatively, the processor may be a combination of processors implementing a computing function, for example, a combination of one or more microprocessors, or a combination of a DSP and a microprocessor.

The internal connection 1002 may include a path for transmitting information between the foregoing components. The internal connection 1002 may be a board, a bus, or the like. The bus may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used for representation in FIG. 18, but this does not mean that there is only one bus or only one type of buses.

The at least one network interface 1003 uses any apparatuses such as a transceiver, and is configured to communicate with another device or a communication network. The communication network may be an Ethernet, a radio access network, a wireless local area network (Wireless Local Area Network, WLAN), or the like. The network interface 1003 may include a wired communication interface, and may further include a wireless communication interface. Specifically, the network interface 1003 may be an Ethernet interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network WLAN interface, a cellular network communication interface, or a combination thereof. The Ethernet interface may be an optical interface, an electrical interface, or a combination thereof. In this embodiment of this application, the network interface 1003 may be configured for communication between the communication device 1000 and another device.

In a specific implementation, in an embodiment, the processor 1001 may include one or more CPUs, for example, a CPU 0 and a CPU 1 in FIG. 18. Each of the CPUs may be a single-core processor, or may be a multi-core processor. The processor herein may be one or more devices, circuits, and/or processing cores for processing data (for example, a computer program instruction). In a specific implementation, in an embodiment, the communication device 1000 may include a plurality of processors, for example, the processor 1001 and a processor 1007 in FIG. 18. Each of the processors may be a single-core (single-CPU) processor, or may be a multi-core (multi-CPU) processor. The processor herein may be one or more devices, circuits, and/or processing cores for processing data (for example, a computer program instruction).

In a specific implementation, in an embodiment, the communication device 1000 may further include an output device and an input device. The output device communicates with the processor 1001, and may display information in a plurality of manners. For example, the output device may be a liquid crystal display (Liquid Crystal Display, LCD), a light-emitting diode (Light-Emitting Diode, LED) display device, a cathode ray tube (Cathode Ray Tube, CRT) display device, or a projector. When communicating with the processor 1001, the input device may receive a user input in a plurality of manners. For example, the input device may be a mouse, a keyboard, a touchscreen device, or a sensing device.

In a specific embodiment, the communication device 1000 in this embodiment of this application may correspond to the foregoing embodiments, for example, the first device in the embodiments corresponding to FIG. 1 and FIG. 6. The processor 1001 in the communication device 1000 invokes computer program code, so that the communication device 1000 shown in FIG. 18 can perform all or some of operations of the first device in the foregoing embodiments.

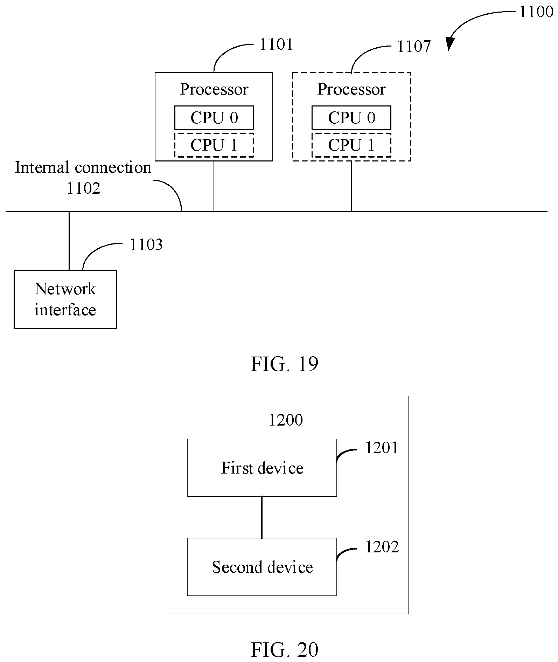

FIG. 19 is a schematic diagram of a communication device 1100 according to an embodiment of this application. The communication device 1100 may be the second device according to any one of the foregoing embodiments, for example, may be the second device 102 in the network architecture 100 shown in FIG. 1 or FIG. 2, or the second device in the method 700 shown in FIG. 12. The communication device 1100 includes at least one processor 1101, an internal connection 1102, and at least one network interface 1103.

The communication device 1100 is an apparatus having a hardware structure.

In some embodiments, the communication device 1100 may be configured to implement a functional module in the apparatus 900 in FIG. 17. For example, a person skilled in the art may figure out that the processing unit 902 in the apparatus 900 in FIG. 17 may be implemented by the at least one processor 1101 by invoking computer program code, and the receiving unit 901 in the apparatus 900 in FIG. 17 may be implemented by the at least one network interface 1103.

The communication device 1100 may be further configured to implement a function of the second device according to any one of the foregoing embodiments.

The processor 1101 is, for example, a general-purpose central processing unit (Central Processing Unit, CPU), a digital signal processor (Digital Signal Processor, DSP), a network processor (Network Processor, NP), a graphics processing unit (Graphics Processing Unit, GPU), a neural-network processing unit (Neural-network Processing Unit, NPU), a data processing unit (Data Processing Unit, DPU), a microprocessor, or one or more integrated circuits configured to implement the solutions of this application. For example, the processor 701 includes an application-specific integrated circuit (Application-specific Integrated Circuit, ASIC), a programmable logic device (Programmable Logic Device, PLD) or another programmable logic device, a transistor logic device, a hardware component, or any combination thereof. The PLD is, for example, a complex programmable logic device (Complex Programmable Logic Device, CPLD), a field programmable gate array (Field Programmable Gate Array, FPGA), a generic array logic (Generic Array Logic, GAL), or any combination thereof. The processor may implement or execute various logical blocks, modules, and circuits described with reference to content disclosed in embodiments of this application. Alternatively, the processor may be a combination of processors implementing a computing function, for example, a combination of one or more microprocessors, or a combination of a DSP and a microprocessor.

The internal connection 1102 may include a path for transmitting information between the foregoing components. The internal connection 1102 may be a board, a bus, or the like. The bus may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used for representation in FIG. 19, but this does not mean that there is only one bus or only one type of buses.

The at least one network interface 1103 uses any apparatuses such as a transceiver, and is configured to communicate with another device or a communication network. The communication network may be an Ethernet, a radio access network, a wireless local area network (Wireless Local Area Network, WLAN), or the like. The network interface 1103 may include a wired communication interface, and may further include a wireless communication interface. Specifically, the network interface 1103 may be an Ethernet interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network WLAN interface, a cellular network communication interface, or a combination thereof. The Ethernet interface may be an optical interface, an electrical interface, or a combination thereof. In this embodiment of this application, the network interface 1103 may be configured for communication between the communication device 1100 and another device.

In a specific implementation, in an embodiment, the processor 1101 may include one or more CPUs, for example, a CPU 0 and a CPU 1 in FIG. 19. Each of the CPUs may be a single-core processor, or may be a multi-core processor. The processor herein may be one or more devices, circuits, and/or processing cores for processing data (for example, a computer program instruction). In a specific implementation, in an embodiment, the communication device 1100 may include a plurality of processors, for example, the processor 1101 and a processor 1107 in FIG. 19. Each of the processors may be a single-core (single-CPU) processor, or may be a multi-core (multi-CPU) processor. The processor herein may be one or more devices, circuits, and/or processing cores for processing data (for example, a computer program instruction).

In a specific implementation, in an embodiment, the communication device 1100 may further include an output device and an input device. The output device communicates with the processor 1101, and may display information in a plurality of manners. For example, the output device may be a liquid crystal display (Liquid Crystal Display, LCD), a light-emitting diode (Light-Emitting Diode, LED) display device, a cathode ray tube (Cathode Ray Tube, CRT) display device, or a projector. When communicating with the processor 1101, the input device may receive a user input in a plurality of manners. For example, the input device may be a mouse, a keyboard, a touchscreen device, or a sensing device.

In a specific embodiment, the communication device 1100 in this embodiment of this application may correspond to the foregoing embodiments, for example, the second device in the embodiments corresponding to FIG. 1 and FIG. 6. The processor 1101 in the communication device 1100 invokes computer program code, so that the communication device 1100 shown in FIG. 19 can perform all or some of operations of the second device in the foregoing embodiments. Optionally, the communication devices in FIG. 18 and FIG. 19 may each be a routing device, a switching device, or a server.

Optionally, all or some of the routing devices, switching devices, or servers mentioned in this application may alternatively each be a logical functional module or a virtual functional module. Refer to FIG. 20. An embodiment of this application provides a communication system 1200, including the communication apparatus 800 shown in FIG. 16 and the communication apparatus 900 shown in FIG. 17, or including the communication device 1000 shown in FIG. 18 and the communication device 1100 shown in FIG. 19.

The communication apparatus 800 shown in FIG. 16 and the communication device 1000 shown in FIG. 18 may be a first device 1201, and the communication apparatus 900 shown in FIG. 17 and the communication device 1100 shown in FIG. 19 may be a second device 1202.

A sequence of operations in the description, claims, and accompanying drawings of this application is not limited to a specific sequence or order in the descriptions. It should be understood that data used in such a way are simultaneous or a sequence thereof may be altered in appropriate circumstances, so that the embodiments that are described can be implemented in a sequence other than the sequence illustrated or described in the accompanying drawings.

A person of ordinary skill in the art may understand that all or some of the steps in the foregoing embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, and are not intended to limit this application. Any modification, equivalent replacement, or improvement made without departing from the principle of this application shall fall within the protection scope of this application.

## Claims

1. A communication method, wherein the method comprises:
obtaining a data stream, wherein the data stream comprises an alignment marker AM group, the AM group comprises a plurality of AMs, the plurality of AMs comprise a first AM, the first AM comprises a first boundary part and a first padding part, the first padding part comprises a part or all of first information, the first information is used to indicate a specified function, and the first boundary part is used to determine a location of the first AM in the data stream; and
sending the data stream.

2. The method according to claim 1, wherein there are a plurality of obtained data streams, each of the data streams corresponds to one or more AMs in the AM group, and each of the data streams comprises one or more AMs corresponding to each of the data streams.

3. The method according to claim 2, wherein the first information is associated with a first data stream, the plurality of data streams comprise the first data stream, an AM in the first data stream comprises the first information, and the first AM is an AM in the first data stream.

4. The method according to claim 2, wherein the plurality of data streams comprise M data streams, an AM in the M data streams comprises the first information, the first AM is an AM in the M data streams, and M is an integer greater than 0.

5. The method according to claim 4, wherein a padding part of each AM in the M data streams comprises m fields, m is an integer greater than 0, and the first information comprises at least one piece of sub-information; and
m first fields comprise m pieces of first sub-information, m second fields comprise m pieces of second sub-information, the m first fields are fields comprised in a j^{th} AM in an i^{th} data stream, and the m second fields are fields comprised in a j^{th} AM in an (i+1)^{th} data stream, wherein i=1, 2, ..., or M-1, j=1, 2, ..., or N, N is a quantity of AMs in the i^{th} data stream, and the m pieces of first sub-information and the m pieces of second sub-information are 2m continuous pieces of sub-information comprised in the first information; or
M fields comprise M continuous pieces of sub-information, and the M fields comprise an n^{th} field in a j^{th} AM in each data stream in the M data streams, wherein n=1, 2, ..., or m, and the first information comprises the M pieces of sub-information.

6. The method according to claim 5, wherein the m fields in the padding part of each of the AMs comprise a unique pad UP and/or a pad Pad.

7. The method according to any one of claims 1 to 6, wherein the obtaining a data stream comprises:
obtaining the AM group, wherein the AM group comprises the first AM, and the first padding part of the first AM comprises the first information or the part of the first information; and inserting the AM group into a second data stream to obtain the data stream; or
when the AM group is inserted into the data stream, and the inserted AM group comprises the first AM, replacing, in the data stream, content carried in the first padding part of the first AM with the first information or the part of the first information.

8. The method according to any one of claims 1 to 7, wherein the first AM further comprises a first identification part, and the first identification part is used to indicate a data stream corresponding to the first AM.

9. A communication method, wherein the method comprises:
receiving a data stream, wherein the data stream comprises an alignment marker AM group, the AM group comprises a plurality of AMs, the plurality of AMs comprise a first AM, the first AM comprises a first boundary part and a first padding part, the first padding part comprises a part or all of first information, the first information is used to indicate a specified function, and the first boundary part is used to determine a location of the first AM in the data stream; and
obtaining the first information in the AM group.

10. The method according to claim 9, wherein there are a plurality of received data streams, each of the data streams corresponds to one or more AMs in the AM group, and each of the data streams comprises one or more AMs corresponding to each of the data streams.

11. The method according to claim 10, wherein the first information is associated with a first data stream, the plurality of data streams comprise the first data stream, an AM in the first data stream comprises the first information, and the first AM is an AM in the first data stream.

12. The method according to claim 10, wherein the plurality of data streams comprise M data streams, an AM in the M data streams comprises the first information, the first AM is an AM in the M data streams, and M is an integer greater than 0.

13. The method according to claim 12, wherein a padding part of each AM in the M data streams comprises m fields, m is an integer greater than 0, and the first information comprises at least one piece of sub-information; and
m first fields comprise m pieces of first sub-information, m second fields comprise m pieces of second sub-information, the m first fields are fields comprised in a j^{th} AM in an i^{th} data stream, and the m second fields are fields comprised in a j^{th} AM in an (i+1)^{th} data stream, wherein i=1, 2, ..., or M-1, j=1, 2, ..., or N, N is a quantity of AMs in the i^{th} data stream, and the m pieces of first sub-information and the m pieces of second sub-information are 2m continuous pieces of sub-information comprised in the first information; or
M fields comprise M continuous pieces of sub-information, and the M fields comprise an n^{th} field in a j^{th} AM in each data stream in the M data streams, wherein n=1, 2, ..., or m, and the first information comprises the M pieces of sub-information.

14. The method according to claim 13, wherein the m fields in the padding part of each of the AMs comprise a unique pad UP and/or a pad Pad.

15. The method according to any one of claims 9 to 14, wherein there are a plurality of received data streams, and the obtaining the first information in the AM group comprises:
after the plurality of data streams are sorted, obtaining the first information in the AM group in the plurality of sorted data streams;
obtaining the first information in at least one first data block and at least one second data block when the at least one first data block and the at least one second data block are obtained by decoding the plurality of sorted data streams, wherein the at least one first data block and the at least one second data block jointly comprise the first information; or
obtaining the first information in an AM group in one data stream when the at least one first data block and the at least one second data block are interleaved to obtain the data stream.

16. The method according to any one of claims 9 to 15, wherein the first AM further comprises a first identification part, and the first identification part is used to indicate a data stream comprising the first AM.

17. A communication apparatus, wherein the apparatus comprises:
a processing unit, configured to obtain a data stream, wherein the data stream comprises an alignment marker AM group, the AM group comprises a plurality of AMs, the plurality of AMs comprise a first AM, the first AM comprises a first boundary part and a first padding part, the first padding part comprises a part or all of first information, the first information is used to indicate a specified function, and the first boundary part is used to determine a location of the first AM in the data stream; and
a sending unit, configured to send the data stream.

18. The apparatus according to claim 17, wherein there are a plurality of obtained data streams, each of the data streams corresponds to one or more AMs in the AM group, and each of the data streams comprises one or more AMs corresponding to each of the data streams.

19. The apparatus according to claim 18, wherein the first information is associated with a first data stream, the plurality of data streams comprise the first data stream, an AM in the first data stream comprises the first information, and the first AM is an AM in the first data stream.

20. The apparatus according to claim 18, wherein the plurality of data streams comprise M data streams, an AM in the M data streams comprises the first information, the first AM is an AM in the M data streams, and M is an integer greater than 0.

21. The apparatus according to claim 20, wherein a padding part of each AM in the M data streams comprises m fields, m is an integer greater than 0, and the first information comprises at least one piece of sub-information; and
m first fields comprise m pieces of first sub-information, m second fields comprise m pieces of second sub-information, the m first fields are fields comprised in a j^{th} AM in an i^{th} data stream, and the m second fields are fields comprised in a j^{th} AM in an (i+1)^{th} data stream, wherein i=1, 2, ..., or M-1, j=1, 2, ..., or N, N is a quantity of AMs in the i^{th} data stream, and the m pieces of first sub-information and the m pieces of second sub-information are 2m continuous pieces of sub-information comprised in the first information; or
M fields comprise M continuous pieces of sub-information, and the M fields comprise an n^{th} field in a j^{th} AM in each data stream in the M data streams, wherein n=1, 2, ..., or m, and the first information comprises the M pieces of sub-information.

22. The apparatus according to claim 21, wherein the m fields in the padding part of each of the AMs comprise a unique pad UP and/or a pad Pad.

23. The apparatus according to any one of claims 17 to 22, wherein the processing unit is further configured to:
obtain the AM group, wherein the AM group comprises the first AM, and the first padding part of the first AM comprises the first information or the part of the first information; and insert the AM group into a second data stream to obtain the data stream; or
when the AM group is inserted into the data stream, and the inserted AM group comprises the first AM, replace, in the data stream, content carried in the first padding part of the first AM with the first information or the part of the first information.

24. The apparatus according to any one of claims 17 to 23, wherein the first AM further comprises a first identification part, and the first identification part is used to indicate a data stream corresponding to the first AM.

25. A communication apparatus, wherein the apparatus comprises:
a receiving unit, configured to receive a data stream, wherein the data stream comprises an alignment marker AM group, the AM group comprises a plurality of AMs, the plurality of AMs comprise a first AM, the first AM comprises a first boundary part and a first padding part, the first padding part comprises a part or all of first information, the first information is used to indicate a specified function, and the first boundary part is used to determine a location of the first AM in the data stream; and
a processing unit, configured to obtain the first information in the AM group.

26. The apparatus according to claim 25, wherein there are a plurality of received data streams, each of the data streams corresponds to one or more AMs in the AM group, and each of the data streams comprises one or more AMs corresponding to each of the data streams.

27. The apparatus according to claim 26, wherein the first information is associated with a first data stream, the plurality of data streams comprise the first data stream, an AM in the first data stream comprises the first information, and the first AM is an AM in the first data stream.

28. The apparatus according to claim 26, wherein the plurality of data streams comprise M data streams, an AM in the M data streams comprises the first information, the first AM is an AM in the M data streams, and M is an integer greater than 0.

29. The apparatus according to claim 28, wherein a padding part of each AM in the M data streams comprises m fields, m is an integer greater than 0, and the first information comprises at least one piece of sub-information; and
m first fields comprise m pieces of first sub-information, m second fields comprise m pieces of second sub-information, the m first fields are fields comprised in a j^{th} AM in an i^{th} data stream, and the m second fields are fields comprised in a j^{th} AM in an (i+1)^{th} data stream, wherein i=1, 2, ..., or M-1, j=1, 2, ..., or N, N is a quantity of AMs in the i^{th} data stream, and the m pieces of first sub-information and the m pieces of second sub-information are 2m continuous pieces of sub-information comprised in the first information; or
M fields comprise M continuous pieces of sub-information, and the M fields comprise an n^{th} field in a j^{th} AM in each data stream in the M data streams, wherein n=1, 2, ..., or m, and the first information comprises the M pieces of sub-information.

30. The apparatus according to claim 29, wherein the m fields in the padding part of each of the AMs comprise a unique pad UP and/or a pad Pad.

31. The apparatus according to any one of claims 25 to 30, wherein there are a plurality of received data streams, and the processing unit is configured to:
after the plurality of data streams are sorted, obtain the first information in the AM group in the plurality of sorted data streams;
obtain the first information in at least one first data block and at least one second data block when the at least one first data block and the at least one second data block are obtained by decoding the plurality of sorted data streams, wherein the at least one first data block and the at least one second data block jointly comprise the first information; or
obtain the first information in an AM group in one data stream when the at least one first data block and the at least one second data block are interleaved to obtain the data stream.

32. The apparatus according to any one of claims 25 to 31, wherein the first AM further comprises a first identification part, and the first identification part is used to indicate a data stream comprising the first AM.

33. A communication device, comprising a processor and a computer program, wherein when the processor executes the computer program, the device is enabled to implement the method according to any one of claims 1 to 16.

34. A computer-readable storage medium, storing a computer program, wherein when the computer program is executed by a computer, the method according to any one of claims 1 to 16 is implemented.

35. A computer program product, comprising a computer program, wherein when the computer program is executed by a computer, the method according to any one of claims 1 to 16 is implemented.

36. A communication system, wherein the communication system comprises the apparatus according to any one of claims 17 to 24 and/or the apparatus according to any one of claims 25 to 32.
